# EUROPEAN PATENT APPLICATION

(11) **EP 4 355 001 A1**
(43) Date of publication of application: **17.04.2024**
(21) Application number: 22819401.5
(22) Date of filing: 30.05.2022
(51) Int. Cl.: H04W 72/10, H04W 72/04

(54) **METHOD FOR ACCESSING NETWORK, AND COMMUNICATION APPARATUS**

(30) Priority: 11.06.2021 CN 202110652970
(71) Applicant: Huawei Technologies Co., Ltd., Shenzhen, Guangdong 518129 (CN)
(72) Inventor: HOU, Xiaoyue, Shenzhen, Guangdong 518129 (CN); LUO, Jiajin, Shenzhen, Guangdong 518129 (CN); ZHOU, Baojian, Shenzhen, Guangdong 518129 (CN); PENG, Xiaohui, Shenzhen, Guangdong 518129 (CN)
(74) Representative: Gill Jennings & Every LLP
(86) International application number: PCT/CN2022/096063
(87) International publication number: WO 2022/257803

(57) **Abstract**

This application discloses a network access method and a communication apparatus. The method includes: A terminal device determines a first access resource set based on a priority of a first service, and accesses a network based on a resource in the first access resource set. Different priorities correspond to different access resource sets. In this method, priorities of services are divided based on priority parameters of the services, and access resources are divided based on the priorities. For example, a service that requires a quick response has a high priority, and a large quantity of access resources are allocated. In this way, a probability that a collision occurs when services of various types access the network is reduced, thereby reducing delays of accessing the network by the services of various types.

## Description

### CROSS-REFERENCE TO RELATED APPLICATIONS

This application claims priority to Chinese Patent Application No. 202110652970.X, filed with the China National Intellectual Property Administration on June 11, 2021 and entitled "NETWORK ACCESS METHOD AND COMMUNICATION APPARATUS", which is incorporated herein by reference in its entirety.

### TECHNICAL FIELD

This application relates to the field of communication technologies, and in particular, to a network access method and a communication apparatus.

### BACKGROUND

A terminal device needs to complete initial access before completing a service, for example, may access a network by using a random access process. Random access in a new radio (new radio, NR) system is to perform contention-based multi-address access on a same interface. Generally, a network includes a plurality of terminal devices, and a plurality of different services may be performed. Services of different types have different delay requirements. If contention-based multi-address access is performed on a same interface for any service, access of a service that requires a quick response may be delayed. In addition, as terminal devices of sensing services increase, more terminal devices contend for access, and therefore the access of the service that requires a quick response is more delayed.

### SUMMARY

This application provides a network access method and a communication apparatus, to reduce a probability that a collision occurs when services of various types access a network, thereby reducing delays of accessing the network by the services of various types.

According to a first aspect, a network access method is provided. The method may be performed by a first communication apparatus. The first communication apparatus may be a communication device or a communication apparatus that can support a communication device in implementing a function required by the method, for example, a chip system. The following uses an example in which the communication device is a terminal device for description. The method includes:
The terminal device monitors a first channel or a second channel based on a type of the terminal device; and when the type of the terminal device is a sensing type or an integrated sensing and communication type, the terminal device monitors the first channel or the second channel; or when the type of the terminal device is a communication type, the terminal device monitors the first channel; and when accessing a network, the terminal device determines a first access resource set based on a priority of a first service, and accesses the network based on a result of monitoring the first channel or the second channel and a resource in the first access resource set, where at least one of the following priority parameters of services with different priorities is different: a delay tolerance value, a data amount, a network access frequency, a quantity of terminal devices, or an activeness, the activeness is a quantity of devices of a same type that need to access the network per unit time, and different priorities correspond to different access resource sets.

In this embodiment of this application, priorities of services may be divided based on priority parameters of the services. For example, a service with low delay tolerance has a high priority, and a service with high delay tolerance has a low priority. Different quantities of access resources may be allocated to services with different priorities. For example, more access resources are allocated to a service with a higher priority, and fewer access resources are allocated to a service with a lower priority. In this way, a service that requires a quick response, for example, the service with a high priority, can obtain more allocated access resources, thereby reducing a network access delay.

In a possible implementation, the first channel is used to carry first information, and the first information indicates a first correspondence between a priority and an access resource set. The second channel is used to carry second information, and the second information indicates a second correspondence between a priority and an access resource set.

In this embodiment of this application, the first channel and the second channel each may carry a correspondence between a priority and an access resource set. A plurality of services (terminal devices) may use a contention access procedure with a same address. If a plurality of terminal devices use a contention access procedure with a same address, it may be considered that the plurality of terminal devices share one channel, for example, the first channel. In this way, an existing network-side access procedure does not need to be changed. A plurality of services (terminal devices) may use different contention access procedures with a plurality of addresses. If a plurality of terminal devices use different contention access procedures with a plurality of addresses, it may be considered that terminal devices of different types monitor different channels. For example, a terminal device of the communication type monitors the first channel, and a terminal device of the sensing type or the integrated sensing and communication type may monitor the first channel or the second channel. It should be understood that, compared with the first channel, the second channel may be considered as a channel dedicated to the terminal device of the sensing type or the integrated sensing and communication type. Because terminal devices of different types are separated from each other in an access procedure, it is more convenient to manage orderly access of terminal devices of various types to the network. In addition, when the terminal device of the sensing type or the integrated sensing and communication type accesses the network for a sensing service, it is unnecessary to perform an entire conventional network access procedure. This further reduces network access time. In addition, the second channel is used for the terminal device of the sensing type or the integrated sensing and communication type, and basically relates to the sensing service. Therefore, a correspondence between a priority of a communication-type service and an access resource set may not need to be sent, to reduce signaling overheads.

In a possible implementation, before the terminal device determines the first access resource set based on the priority of the first service, the method further includes: The terminal device determines the priority of the first service based on a priority parameter of the first service and a third correspondence. The third correspondence is a correspondence between a priority and a priority parameter. This solution provides a possible solution in which the terminal device determines the priority of the first service. To be specific, the terminal device may obtain the priority parameter of the first service, and determine the priority of the first service based on the third correspondence.

In an alternative solution, before the terminal device determines the first access resource set based on the priority of the first service, the method further includes: The terminal device obtains first indication information, where the first indication information indicates the priority of the first service, or the first indication information indicates one or more priority parameters. In this solution, the network device may determine the priority of the first service, and notify the terminal device of the priority of the first service by using the first indication information. Alternatively, the network device may notify the terminal device of one or more priority parameters of the first service, so that the terminal device may determine the priority of the first service with reference to the priority parameters notified by the network device. Because the network device may learn more priority parameters than the terminal device, the priority of the first service determined in this solution is more accurate.

In a possible implementation, the method further includes: The terminal device obtains second indication information, where the second indication information indicates the third correspondence. In this solution, the network device may send the third correspondence to the terminal device. This is more flexible.

In a possible implementation, the method further includes: The terminal device obtains third indication information, where the third indication information indicates a fourth correspondence, and the fourth correspondence is obtained by updating the third correspondence based on one or more priority parameters that change in the at least one priority parameter. In this solution, the network device may adaptively adjust the correspondence between a priority parameter and a priority based on a changed priority parameter, to ensure that an access resource set determined by the terminal device based on a final priority is appropriate.

In a possible implementation, the method further includes: The terminal device obtains configuration information, where the configuration information indicates a plurality of access resource sets, and the plurality of access resource sets include the first access resource set and a second access resource set. The first access resource set and the second access resource set meet: An average spacing between adjacent resource elements included in the first access resource set is a first spacing, an average spacing between adjacent resource elements included in the second access resource set is a second spacing, the first spacing is greater than the second spacing, and a priority corresponding to the first access resource set is lower than a priority corresponding to the second access resource set. Different access resource sets include different quantities of resource elements. For example, an average spacing between adjacent resource elements in an access resource set corresponding to a high priority is lower than an average spacing between adjacent resource elements in an access resource set corresponding to a low priority. In other words, a quantity of resource elements included in the access resource set corresponding to the high priority is greater than a quantity of resource elements included in the access resource set corresponding to the low priority. In this way, the service with a high priority can obtain more allocated access resources, thereby reducing the network access delay.

In a possible implementation, the method further includes: When accessing the network by using the resource in the first access resource set, if determining that a quantity of collisions with another terminal device within preset duration is greater than or equal to a first preset threshold, the terminal device increases the priority of the first service by one level within a preset priority range. It should be understood that, when the terminal device accesses the network by using a resource in an initially obtained first access resource set, if a probability of a collision with another terminal device is still high, it may be considered that the terminal device needs more access resources. Therefore, the terminal device may increase the priority of the first service by one level, so that an access resource set corresponding to a priority that is one level higher than the priority of the first service is used next time to access the network, to reduce a probability that a collision occurs when the terminal device accesses the network.

On the contrary, when accessing the network by using the resource in the first access resource set, if determining that a quantity of collisions with another terminal device within preset duration is less than or equal to a second preset threshold, the terminal device decreases the priority of the first service by one level within a preset priority range. It should be understood that, when the terminal device accesses the network by using a resource in an initially obtained first access resource set, if a probability of a collision with another terminal device is low, it may be considered that resources in the first access resource set are sufficient for the first service to access the network, or even there may be remaining resources. In this case, the terminal device may decrease the priority of the first service by one level, so that an access resource set corresponding to a priority that is one level lower than the priority of the first service is used next time to access the network, to reduce resource overheads as much as possible.

According to a second aspect, a network access method is provided. The method may be performed by a second communication apparatus. The first communication apparatus may be a communication device or a communication apparatus that can support a communication device in implementing a function required by the method, for example, a chip system. The following uses an example in which the communication device is a network device for description. The method includes:
The network device sends a first channel and a second channel, and receives an access request from a terminal device, where the access request is used to request to access a network, the first channel is used for a terminal device of a communication type, a sensing type, or an integrated sensing and communication type, the second channel is used for a terminal device of a sensing type or an integrated sensing and communication type, the first channel is used to carry first information, the first information indicates a first correspondence between a priority and an access resource set, the second channel is used to carry second information, and the second information indicates a second correspondence between a priority and an access resource set.

In a possible implementation, the method further includes: The network device sends first indication information, where the first indication information indicates a priority of a first service, or the first indication information indicates at least one priority parameter of a first service, the first service is a service to be performed by the terminal device, the priority parameter includes at least one of the following: a delay tolerance value, a data amount, a network access frequency, a quantity of terminal devices, or an activeness, and the activeness is a quantity of devices of a same type that need to access the network per unit time.

In a possible implementation, the method further includes: The network device sends second indication information, where the second indication information indicates a third correspondence between a priority parameter and a priority.

In a possible implementation, the method further includes: The network device determines that one or more priority parameters of the first service change, and updates the third correspondence to a fourth correspondence based on the one or more changed priority parameters; and the network device sends third indication information, where the third indication information indicates the fourth correspondence.

In a possible implementation, the method further includes: The network device sends configuration information, where the configuration information indicates a plurality of access resource sets, and the plurality of access resource sets include the first access resource set and a second access resource set. The first access resource set and the second access resource set meet: An average spacing between adjacent resource elements included in the first access resource set is a first spacing, an average spacing between adjacent resource elements included in the second access resource set is a second spacing, the first spacing is greater than the second spacing, and a priority corresponding to the first access resource set is lower than a priority corresponding to the second access resource set.

For technical effect brought by the second aspect or the possible implementations of the second aspect, refer to the descriptions of the technical effect of the first aspect or the possible implementations of the first aspect.

According to a third aspect, an embodiment of this application provides a communication apparatus. The communication apparatus may be a terminal-side communication device or a communication apparatus that can support a terminal-side communication device in implementing a function required by the method according to the first aspect or the possible implementations of the first aspect, for example, a chip or a chip system. The communication apparatus may include a processing module and a transceiver module. The transceiver module is configured to: monitor a first channel or a second channel based on a type of the communication apparatus; and when the type of the communication apparatus is a sensing type or an integrated sensing and communication type, monitor, by the communication apparatus, the first channel or the second channel; or when the type of the communication apparatus is a communication type, monitor, by the communication apparatus, the first channel. The processing module is configured to: determine a first access resource set based on a priority of a first service, and access a network based on a result of monitoring the first channel or the second channel and a resource in the first access resource set, where different priorities correspond to different access resource sets, at least one of the following priority parameters of services with different priorities is different: a delay tolerance value, a data amount, a network access frequency, a quantity of terminal devices, or an activeness, and the activeness is a quantity of devices of a same type that need to access the network per unit time.

In a possible implementation, the first channel is used to carry first information, and the first information indicates a first correspondence between a priority and an access resource set. The second channel is used to carry second information, and the second information indicates a second correspondence between a priority and an access resource set.

In a possible implementation, before the processing module determines the first access resource set based on the priority of the first service, the transceiver module is further configured to obtain first indication information, where the first indication information indicates the priority of the first service, or the first indication information indicates one or more priority parameters. Alternatively, before the processing module determines the first access resource set based on the priority of the first service, the processing module is further configured to determine the priority of the first service based on a priority parameter of the first service and a third correspondence, where the third correspondence is a correspondence between a priority and a priority parameter.

In a possible implementation, the transceiver module is further configured to obtain second indication information, where the second indication information indicates the third correspondence.

In a possible implementation, the transceiver module is further configured to obtain third indication information, where the third indication information indicates a fourth correspondence, and the fourth correspondence is obtained by updating the third correspondence based on one or more priority parameters that change in the at least one priority parameter.

In a possible implementation, the transceiver module is further configured to obtain configuration information, where the configuration information indicates a plurality of access resource sets, and the plurality of access resource sets include the first access resource set and a second access resource set. The first access resource set and the second access resource set meet: An average spacing between adjacent resource elements included in the first access resource set is a first spacing, an average spacing between adjacent resource elements included in the second access resource set is a second spacing, the first spacing is greater than the second spacing, and a priority corresponding to the first access resource set is lower than a priority corresponding to the second access resource set.

In a possible implementation, the processing module is further configured to: when the network is accessed by using the resource in the first access resource set, if it is determined that a quantity of collisions with another terminal device within preset duration is greater than or equal to a first preset threshold, increase the priority of the first service by one level within a preset priority range.

In a possible implementation, the processing module is further configured to: when the network is accessed by using the resource in the first access resource set, if it is determined that a quantity of collisions with another terminal device within preset duration is less than or equal to a second preset threshold, decrease the priority of the first service by one level within a preset priority range.

For technical effect brought by the third aspect or the possible implementations of the third aspect, refer to the descriptions of the technical effect of the first aspect or the possible implementations of the first aspect.

According to a fourth aspect, an embodiment of this application provides a communication apparatus. The communication apparatus may be a network-side communication device or a communication apparatus that can support a network-side communication device in implementing a function required by the method according to the second aspect or the possible implementations of the second aspect, for example, a chip or a chip system. The communication apparatus may include a processing module and a transceiver module. The processing module is configured to generate a first channel and a second channel, where the first channel is used for a terminal device of a communication type, a sensing type, or an integrated sensing and communication type, the second channel is used for a terminal device of a sensing type or an integrated sensing and communication type, the first channel is used to carry first information, the first information indicates a first correspondence between a priority and an access resource set, the second channel is used to carry second information, and the second information indicates a second correspondence between a priority and an access resource set. The transceiver module is configured to send the first channel and the second channel.

In a possible implementation, the transceiver module is further configured to send first indication information, where the first indication information indicates a priority of a first service, or the first indication information indicates at least one priority parameter of a first service, the first service is a service to be performed by the communication apparatus, the priority parameter includes at least one of the following: a delay tolerance value, a data amount, a network access frequency, a quantity of terminal devices, or an activeness, and the activeness is a quantity of devices of a same type that need to access a network per unit time.

In a possible implementation, the transceiver module is further configured to send second indication information, where the second indication information indicates a third correspondence between a priority parameter and a priority.

In a possible implementation, the processing module is further configured to: determine that one or more priority parameters of the first service change, and update the third correspondence to a fourth correspondence based on the one or more changed priority parameters. The transceiver module is further configured to send third indication information, where the third indication information indicates the fourth correspondence.

In a possible implementation, the transceiver module is further configured to send configuration information, where the configuration information indicates a plurality of access resource sets, and the plurality of access resource sets include the first access resource set and a second access resource set. The first access resource set and the second access resource set meet: An average spacing between adjacent resource elements included in the first access resource set is a first spacing, an average spacing between adjacent resource elements included in the second access resource set is a second spacing, the first spacing is greater than the second spacing, and a priority corresponding to the first access resource set is lower than a priority corresponding to the second access resource set.

For technical effect brought by the fourth aspect or the possible implementations of the fourth aspect, refer to the descriptions of the technical effect of the first aspect or the possible implementations of the first aspect.

According to a fifth aspect, an embodiment of this application provides a communication apparatus. The communication apparatus may be the communication apparatus in the third aspect or the fourth aspect in the foregoing embodiments, or a chip or a chip system disposed in the communication apparatus in the third aspect or the fourth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the terminal device or the network device in the foregoing method embodiments.

In a possible implementation, the communication interface is configured to: monitor a first channel or a second channel based on a type of the communication apparatus; and when the type of the communication apparatus is a sensing type or an integrated sensing and communication type, monitor, by the communication apparatus, the first channel or the second channel; or when the type of the communication apparatus is a communication type, monitor, by the communication apparatus, the first channel. The processor is configured to: determine a first access resource set based on a priority of a first service, and access a network based on a result of monitoring the first channel or the second channel and a resource in the first access resource set, where different priorities correspond to different access resource sets, at least one of the following priority parameters of services with different priorities is different: a delay tolerance value, a data amount, a network access frequency, a quantity of terminal devices, or an activeness, and the activeness is a quantity of devices of a same type that need to access the network per unit time.

In an optional implementation, the first channel is used to carry first information, and the first information indicates a first correspondence between a priority and an access resource set. The second channel is used to carry second information, and the second information indicates a second correspondence between a priority and an access resource set.

In an optional implementation, before the processor determines the first access resource set based on the priority of the first service, the communication interface is further configured to obtain first indication information, where the first indication information indicates the priority of the first service, or the first indication information indicates one or more priority parameters. Alternatively, before the processor determines the first access resource set based on the priority of the first service, the processor is further configured to determine the priority of the first service based on a priority parameter of the first service and a third correspondence, where the third correspondence is a correspondence between a priority and a priority parameter.

In an optional implementation, the communication interface is further configured to obtain second indication information, where the second indication information indicates the third correspondence.

In an optional implementation, the communication interface is further configured to obtain third indication information, where the third indication information indicates a fourth correspondence, and the fourth correspondence is obtained by updating the third correspondence based on one or more priority parameters that change in the at least one priority parameter.

In an optional implementation, the communication interface is further configured to obtain configuration information, where the configuration information indicates a plurality of access resource sets, and the plurality of access resource sets include the first access resource set and a second access resource set. The first access resource set and the second access resource set meet: An average spacing between adj acent resource elements included in the first access resource set is a first spacing, an average spacing between adjacent resource elements included in the second access resource set is a second spacing, the first spacing is greater than the second spacing, and a priority corresponding to the first access resource set is lower than a priority corresponding to the second access resource set.

In an optional implementation, the processor is further configured to: when the network is accessed by using the resource in the first access resource set, if it is determined that a quantity of collisions with another terminal device within preset duration is greater than or equal to a first preset threshold, increase the priority of the first service by one level within a preset priority range.

In an optional implementation, the processor is further configured to: when the network is accessed by using the resource in the first access resource set, if it is determined that a quantity of collisions with another terminal device within preset duration is less than or equal to a second preset threshold, decrease the priority of the first service by one level within a preset priority range.

In another possible implementation, the processor is configured to generate a first channel and a second channel, where the first channel is used for a terminal device of a communication type, a sensing type, or an integrated sensing and communication type, the second channel is used for a terminal device of a sensing type or an integrated sensing and communication type, the first channel is used to carry first information, the first information indicates a first correspondence between a priority and an access resource set, the second channel is used to carry second information, and the second information indicates a second correspondence between a priority and an access resource set. The communication interface is configured to send the first channel and the second channel.

In an optional implementation, the communication interface is further configured to send first indication information, where the first indication information indicates a priority of a first service, or the first indication information indicates at least one priority parameter of a first service, the first service is a service to be performed by the communication apparatus, the priority parameter includes at least one of the following: a delay tolerance value, a data amount, a network access frequency, a quantity of terminal devices, or an activeness, and the activeness is a quantity of devices of a same type that need to access a network per unit time.

In an optional implementation, the communication interface is further configured to send second indication information, where the second indication information indicates a third correspondence between a priority parameter and a priority.

In an optional implementation, the processor is further configured to: determine that one or more priority parameters of the first service change, and update the third correspondence to a fourth correspondence based on the one or more changed priority parameters. The communication interface is further configured to send third indication information, where the third indication information indicates the fourth correspondence.

In an optional implementation, the communication interface is further configured to send configuration information, where the configuration information indicates a plurality of access resource sets, and the plurality of access resource sets include the first access resource set and a second access resource set. The first access resource set and the second access resource set meet: An average spacing between adjacent resource elements included in the first access resource set is a first spacing, an average spacing between adjacent resource elements included in the second access resource set is a second spacing, the first spacing is greater than the second spacing, and a priority corresponding to the first access resource set is lower than a priority corresponding to the second access resource set.

According to a sixth aspect, an embodiment of this application provides a communication apparatus. The communication apparatus includes an input/output interface and a logic circuit. The input/output interface is configured to input and/or output information. The logic circuit is configured to perform the method according to the first aspect, or the logic circuit is configured to perform the method according to the second aspect.

According to a seventh aspect, an embodiment of this application provides a chip system. The chip system includes a processor, may further include a memory and/or a communication interface, and is configured to implement the method according to the first aspect or the second aspect. In a possible implementation, the chip system further includes the memory, configured to store program instructions and/or data. The chip system may include a chip, or may include a chip and another discrete component.

According to an eighth aspect, an embodiment of this application provides a communication system. The communication system includes the communication apparatus according to the third aspect and the communication apparatus according to the fourth aspect; or the communication system includes the communication apparatus according to the third aspect and the communication apparatus according to another possible implementation of the fifth aspect; or the communication system includes the communication apparatus according to the fourth aspect and the communication apparatus according to a possible implementation of the fifth aspect.

According to a ninth aspect, this application provides a computer-readable storage medium. The computer-readable storage medium stores a computer program; and when the computer program is run, the method according to the first aspect or the second aspect is implemented.

According to a tenth aspect, a computer program product is provided. The computer program product includes computer program code; and when the computer program code is run, the method according to the first aspect or the second aspect is performed.

For beneficial effect of the fifth aspect to the tenth aspect and implementations thereof, refer to descriptions of beneficial effect of the aspects or the aspects and the implementations thereof.

### BRIEF DESCRIPTION OF DRAWINGS

FIG. 1 is a schematic diagram of a network architecture to which an embodiment of this application is applicable;
FIG. 2 is a flowchart of a 4-step random access process;
FIG. 3 is a flowchart of a 2-step random access process;
FIG. 4 is a schematic flowchart of accessing a network according to an embodiment of this application;
FIG. 5 is a schematic diagram of a plurality of access resource sets according to an embodiment of this application;
FIG. 6 is another schematic diagram of a plurality of access resource sets according to an embodiment of this application;
FIG. 7 is still another schematic diagram of a plurality of access resource sets according to an embodiment of this application;
FIG. 8 is a schematic diagram in which a plurality of services contend for accessing a network by using a same address according to an embodiment of this application;
FIG. 9 is a schematic diagram in which a plurality of services contend for accessing a network by using a plurality of different addresses according to an embodiment of this application;
FIG. 10 is a schematic diagram of a structure of a communication apparatus according to an embodiment of this application;
FIG. 11 is another schematic diagram of a structure of a communication apparatus according to an embodiment of this application;
FIG. 12 is still another schematic diagram of a structure of a communication apparatus according to an embodiment of this application;
FIG. 13 is another schematic diagram of a structure of a communication apparatus according to an embodiment of this application; and
FIG. 14 is another schematic diagram of a structure of another communication apparatus according to an embodiment of this application.

### DESCRIPTION OF EMBODIMENTS

To make objectives, technical solution, and advantages of embodiments of this application clearer, the following further describes embodiments of this application in detail with reference to accompanying drawings.

The technical solutions provided in embodiments of this application may be applied to a fifth generation (fifth generation, 5G) mobile communication system, for example, a new radio (new radio, NR) system, or may be applied to a long term evolution (long term evolution, LTE) system, or may be applied to a next generation mobile communication system or another similar communication system. This is not specifically limited.

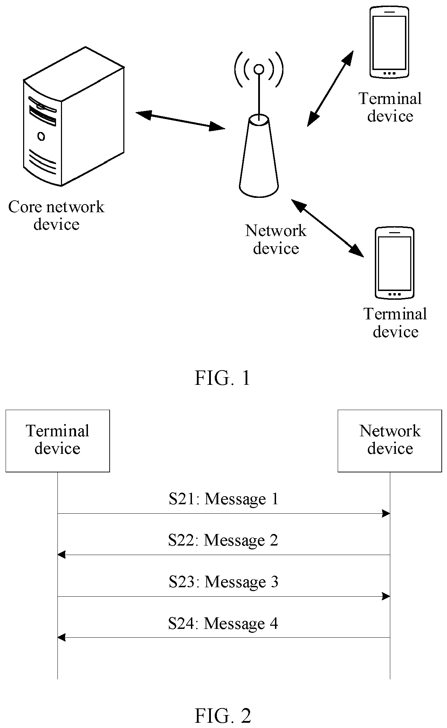

FIG. 1 is an example diagram of an architecture of a communication system to which an embodiment of this application is applicable. The communication system may include a core network device, a network device, and at least one terminal. As shown in FIG. 1, an example in which the at least one terminal is two terminals is used. The terminals are connected to the network device in a wireless manner, and the network device is connected to the core network device in a wireless manner or a wired manner. The core network device and the network device may be different physical devices that are independent of each other; or functions of the core network device and logical functions of the network device are integrated into a same physical device; or some functions of the core network device and some functions of the network device are integrated into a same physical device. FIG. 1 is merely an example, and quantities of core network devices, network devices, and terminals included in the mobile communication system are not limited in this embodiment of this application. In some embodiments, the communication system may further include another network device, for example, a wireless relay device or a wireless backhaul device.

The technical solutions provided in embodiments of this application may be applied to a wireless communication system, for example, a 5G system, a further evolved system based on LTE or NR, a future wireless communication system, or another similar communication system.

The network device is an access device, in the mobile communication system, that is accessed by the terminal device in a wireless manner, for example, includes an access network (access network, AN) device, for example, a base station (for example, an access point). The network device may alternatively be a device that communicates with the terminal over an air interface, for example, another possible terminal apparatus. The network device may include an evolved NodeB (NodeB, eNB, or e-NodeB, evolved NodeB) in a long term evolution (long term evolution, LTE) system or a long term evolution-advanced (long term evolution-advanced, LTE-A) system; or may include a next generation nodeB (next generation nodeB, gNB) in a 5G NR system; or may include an access node in a wireless fidelity (wireless-fidelity, Wi-Fi) system. Alternatively, the network device may be a relay station, a vehicle-mounted device, or a future evolved public land mobile network (Public Land Mobile Network, PLMN) device, a device in a device-to-device (device-to-device, D2D) network, a device in a machine-to-machine (machine-to-machine, M2M) network, a device in an Internet of things (Internet of things, IoT) network, a network device in another PLMN network, or the like. A specific technology and a specific device form that are used by the network device are not limited in embodiments of this application. For example, the network device in FIG. 1 may be a base station, and corresponds to different devices in different systems. For example, the network device in FIG. 1 may correspond to an eNB in a fourth generation (fourth generation, 4G) mobile communication technology system, and correspond to a gNB in a 5G system. In addition, the network device in embodiments of this application may include a central unit (central unit, CU) and a distributed unit (distributed unit, DU), and a plurality of DUs may be centrally controlled by one CU. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, such as a radio link control (radio link control, RLC) layer and a medium access control (medium access control, MAC) layer, are set on the DU. It should be noted that the protocol layer division is merely an example, and there may be division of another protocol layer. A radio frequency apparatus may be remotely deployed and is not disposed in the DU, or may be integrated into the DU, or a part of the radio frequency apparatus is remotely deployed and a part of the radio frequency apparatus is integrated into the DU. This is not limited in embodiments of this application. In addition, in some embodiments, a control plane (control plane, CP) and a user plane (user plane, UP) of the CU may be further separated and implemented by different entities, which are respectively a control plane CU entity (CU-CP entity) and a user plane CU entity (CU-UP entity). In the network architecture, signaling generated by the CU may be sent to UE through the DU, or signaling generated by the UE may be sent to the CU through the DU. The DU may transparently transmit the signaling to the UE or the CU by directly encapsulating the signaling at a protocol layer without parsing the signaling. In the network architecture, the CU is classified as a network device on a RAN side. In addition, the CU may alternatively be classified as a network device on a CN side. This is not limited in this application.

A terminal device, which may be referred to as a terminal for short, or referred to as user equipment (user equipment, UE), is a device having a wireless transceiver function, and may send a signal to the network device, or receive a signal from the network device. The terminal device may be a mobile phone, a tablet computer, a computer having a wireless transceiver function, a virtual-reality terminal device, an augmented-reality terminal device, a wireless terminal device in industrial control, a wireless terminal device in self driving, a wireless terminal device in remote medicine, a wireless terminal device in a smart grid, a wireless terminal device in transportation safety, a wireless terminal device in a smart city, or a wireless terminal device in a smart home. The terminal device may be fixed or mobile. This is not limited in embodiments of this application.

For example, the terminal device in embodiments of this application may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a smart speaker in an IoT network, or the like. As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBU).

In addition, in embodiments of this application, the terminal device may be an apparatus configured to implement a function of a terminal, or may be an apparatus that can support a terminal device in implementing the function, for example, a chip system. The apparatus may be installed in the terminal device. For example, the terminal device may alternatively be a vehicle detector or a sensor in a gas station.

The foregoing describes the network architecture to which embodiments of this application are applicable. The following describes technical features related to embodiments of this application.

All devices need to complete initial access before completing services such as a communication service and a sensing service, for example, may access a network by using a random access process. Random access in a new radio (new radio, NR) system is to perform contention-based multi-address access on a same interface, and is mainly classified into two types: a 4-step random access process (which may also be referred to as a 4-step (step) random access channel (random access channel, RACH) for short) and a 2-step random access process (which may also be referred to as a 2-step RACH for short).

FIG. 2 is a flowchart of a 4-step random access process.

S21: A terminal device sends a message 1 (Msg1) to a network device, and the network device receives the Msg1 from the terminal device. The Msg1 is a random access preamble (random access preamble). The random access preamble sent by the terminal device may be randomly selected from an available preamble set.

S22: The network device sends a message 2 (Msg2) to the terminal device, and the terminal device receives the Msg2 from the network device. The Msg2 is a random access response (random access response) message. Before sending the Msg2 to the terminal device, the network device first sends a physical downlink control channel (physical downlink control channel, PDCCH) to the terminal device. For example, the PDCCH is referred to as a PDCCH 1, and the PDCCH 1 is used to schedule the Msg2. After receiving the PDCCH 1 from the network device, the terminal device receives the Msg2 from the network device based on the scheduling by the PDCCH 1.

S23: The terminal device sends a message 3 (Msg3) to the network device, and the network device receives the Msg3 from the terminal device. Information included in the Msg3 varies based on different cases. Before the terminal device sends the Msg3 to the network device, the network device first sends a PDCCH to the terminal device. For example, the PDCCH is referred to as a PDCCH 2, and the PDCCH 2 is used to schedule the Msg3. After receiving the PDCCH 2 from the network device, the terminal device sends the Msg3 to the network device based on the scheduling by the PDCCH 2.

S24: The network device sends a message 4 (Msg4) to the terminal device, and the terminal device receives the Msg4 from the network device. Information included in the Msg4 varies based on different cases.

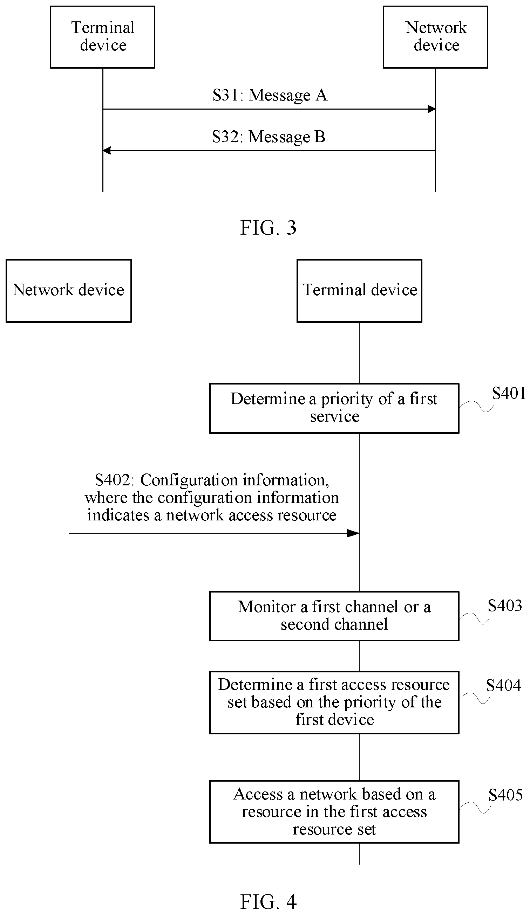

FIG. 3 is a flowchart of a 2-step random access process.

S31: A terminal device sends a message A (MsgA) to a network device, and the network device receives the MsgA from the terminal device.

The MsgAis equivalent to the Msg1 and the Msg3 in the 4-step random access process. This is equivalent to that the terminal device sends the Msg1 and the Msg3 to the network device together. The MsgA may also be referred to as a random access request message.

S32: The network device sends a MsgB to the terminal device, and the terminal device receives the MsgB from the network device.

Generally, the network architecture shown in FIG. 1 includes a plurality of terminal devices, and a plurality of different services may be performed. In addition, the terminal device may support services of more types. For example, the terminal device may support a conventional communication service, for example, a voice call or a video call, and may further support a sensing (sensing) service, for example, an environmental sensing service, a network sensing service, or a positioning sensing service. It should be understood that a terminal device having a sensing function may perform a sensing service (also referred to as a sensing business). The sensing service means sensing a target by using a sensing signal, for example, sensing a behavior or a state such as a position, a speed, an attitude, and a form of the target. Services of different types have different features. For example, compared with the conventional communication service, the sensing service has a smaller transmission data amount. For example, in a positioning scenario, the terminal device may sense a target in a surrounding environment, and transmit related positioning information, for example, transmit several bits of positioning information per second. However, in the conventional communication service, for example, in the video call, more bits of data information need to be transmitted per second. For another example, compared with the conventional communication service, the sensing service usually needs to be completed by a plurality of terminal devices. It may also be considered that in an area range, a quantity of terminal devices for the conventional service is smaller, and a quantity of terminal devices for the sensing service is larger. For example, a conventional call service requires only one terminal device. However, a plurality of terminal devices may be deployed on a vehicle to separately sense a surrounding environment. For another example, compared with the conventional communication service, the sensing service is insensitive to a transmission delay, that is, has higher delay tolerance. For example, a tolerable delay of the environmental sensing service, for example, a temperature sensing service, may reach a minute level, and a tolerable delay of the video call needs to be at a second level. If contention-based multi-address access is performed on a same interface for any service of the terminal device, because services of different types have different features, for example, services of different types have different delay requirements, access of a service that requires a quick response may be delayed. In addition, as terminal devices of sensing services increase, more terminal devices contend for access, and therefore the access of the service that requires a quick response is more delayed.

In view of this, this application provides a new network access method. In the method, priorities of services may be divided based on actual requirements of the services. For example, a priority of a service that requires a quick response is higher than a priority of a service that does not require a quick response. Different quantities of access resources may be allocated to services with different priorities. For example, a large quantity of access resources are allocated to the service that requires a quick response, and a small quantity of access resources are allocated to the service that does not require a quick response. In this way, the service that requires a quick response can obtain more allocated access resources, thereby reducing a network access delay.

The following describes in detail the solutions provided in embodiments of this application with reference to related accompanying drawings. In the following, a priority of a service is a network access priority of the service (or a terminal device that needs to perform the service). In embodiments of this application, access resources corresponding to a service with a higher priority are more than access resources corresponding to a service with a lower priority. In the following, an example in which a service to be performed by the terminal device is a first service is used.

FIG. 4 shows a procedure of a network access method according to an embodiment of this application. In the following description process, an example in which the method is applied to the network architecture shown in FIG. 1 is used. In addition, the method may be performed by two communication apparatuses. The two communication apparatuses are, for example, a first communication apparatus and a second communication apparatus. The first communication apparatus may be a network device or a communication apparatus that can support a network device in implementing a function required in the method. Alternatively, the first communication apparatus may be a terminal device or a communication apparatus that can support a terminal device in implementing a function required in the method. Certainly, the first communication apparatus may alternatively be another communication apparatus, for example, a chip system. Similarly, the second communication apparatus may be a network device or a communication apparatus that can support a network device in implementing a function required in the method. Alternatively, the second communication apparatus may be a terminal device or a communication apparatus that can support a terminal device in implementing a function required in the method. Certainly, the second communication apparatus may alternatively be another communication apparatus, for example, a chip system. In addition, implementations of the first communication apparatus and the second communication apparatus are not limited. For example, the first communication apparatus may be a network device, and the second communication apparatus is a terminal device. Alternatively, both the first communication apparatus and the second communication apparatus are network devices. Alternatively, both the first communication apparatus and the second communication apparatus are terminal devices. Alternatively, the first communication apparatus is a network device, and the second communication apparatus is a communication apparatus that can support a terminal device in implementing a function required in the method. The network device is, for example, a base station.

For ease of description, in the following, an example in which the method is performed by a network device and a terminal device is used. In other words, an example in which the first communication apparatus is a network device and the second communication apparatus is a terminal device is used. If this embodiment is applied to the network architecture shown in FIG. 1, the network device described in the following may be the network device in the network architecture shown in FIG. 1, and the terminal device described in the following may be any terminal device in FIG. 1.

S401: The terminal device determines a priority of a first service.

The terminal device may perform services of a plurality of types, for example, a service of a communication type and a service of a sensing type. Services of different types have different network access requirements. For example, compared with the service of the sensing type, the service of the communication type has a lower delay tolerance value. In other words, compared with the service of the sensing type, the service of the communication type expects to preferentially access a network. Therefore, in this embodiment of this application, priorities of services may be divided based on requirements or features of the services. In this embodiment of this application, the priority of the service is a network access priority of the service. Services of different types may have a same network access priority or different network access priorities. For example, a priority of the service of the communication type is higher than a priority of the service of the sensing type. Services of a same type may have a same network access priority or different network access priorities. For example, in the sensing type, a network access priority of an environmental sensing service is lower than a network access priority of a positioning sensing service.

In some embodiments, the priority of the service may be represented by a service type, for example, the communication type or the sensing type. In this case, a correspondence between a service type and a priority may be predefined. The terminal device may determine the priority of the first service based on the correspondence and a service type of the first service.

For example, Table 1 shows a correspondence between a service type and a service priority.

**Table 1**

| Type of services (Type of services) | Priority (Priority) |
|---|---|
| Communication (Communication) | 0 |
| Integrated sensing and communication (Integrated Sensing & Communication) | 1 |
| Environmental sensing services (Environmental Sensing services) | 2 |
| Positioning (Positioning) | 4 |
| Network sensing (Network sensing) | 3 |

In Table 1, a smaller value indicates a higher priority. For example, "0" indicates a highest priority. Table 1 is merely an example, and it may alternatively be specified that a higher value indicates a lower priority. A specific correspondence between a service type and a priority in Table 1 is merely an example, and does not show an actual correspondence between a service type and a priority. For example, a positioning priority may alternatively be higher than a network sensing priority. For another example, a positioning priority may be equal to a network sensing priority. In addition, a quantity of service types in Table 1 is not limited in this embodiment of this application, and services of more types may be included.

Because services of a same type may correspond to different specific services, even services of a same type may have a plurality of priorities. For example, the environmental sensing service includes services such as weather forecast and building imaging. Compared with the building imaging, the weather forecast has a higher frequency of accessing the network. Therefore, a priority of the weather forecast may be higher than a priority of the building imaging. For another example, in the positioning service, a higher moving speed of a target indicates a higher frequency of accessing the network and a higher priority. For example, a priority of train positioning is higher than a priority of person positioning. In a possible implementation, for services of a same type, priorities may be further divided based on specific services included in the services of the type.

For example, Table 2 shows another correspondence between a service type and a service priority.

**Table 2**

| Type of services | Specific services (Specific services) | Priority |
|---|---|---|
| Communication | Including current communication services (Including current communication services), such as a call and a video | 0 |
| Integrated sensing and communication | Sensing-assisted communication: beam forming and precoding (Sensing-assisted communication: beam forming & precoding) | 1 |
| Environmental sensing service | Large scale (Large scale) (weather forecast, vegetation coverage monitoring, and terrain mapping) | 3-4 |
| | Medium scale (Medium scale) (building and surrounding environment imaging and three-dimensional reconstruction (building imaging)) | 3-3 |
| | Small scale (Small scale) car and human detection (Car and human detection) | 3-2 |
| | Others: deformation monitoring (bridges and buildings) | 3-1 |
| Positioning | Human (Human) at a low speed (Low speed) | 2-4 |
| | Vehicle (Vehicle) at a medium speed (Medium speed) | 2-3 |
| | Train (Train) at a medium- and high-speed (Medium-high speed) | 2-2 |
| | Aircraft (Aircraft) at a medium- and high-speed (Medium-high speed) | 2-1 |
| | Internet of things (IoT) at a low speed/static (Static) | 2-5 |
| Network sensing | Transmission of cooperative information of node services used for sensing services (Node services used for sensing services), and time obtaining | 1 |

Similar to that in Table 1, a smaller value in Table 2 indicates a higher priority. For example, a priority indicated by "2-1" is higher than a priority indicated by "2-2". Table 2 is merely an example, and it may alternatively be specified that a higher value indicates a lower priority. A specific correspondence between a service type and a priority in Table 2 is merely an example, and does not show an actual correspondence between a service type and a priority. In addition, a relationship between a specific service included in each type of service and a corresponding priority is merely an example. In addition, in this embodiment of this application, a quantity of specific services included in services of a same type in Table 2 is not limited, and more specific services may be included. For example, the communication service may alternatively include a plurality of specific services, and the network sensing service may alternatively include a plurality of specific services.

In a possible implementation, Table 1 or Table 2 may be predefined, and the terminal device may determine the priority of the first service based on the type of the first service and Table 1 or Table 2. Generally, the service type does not change. Therefore, Table 1 and Table 2 may be predefined without an indication of the network device. In this way, signaling overheads can be reduced. Certainly, Table 1 or Table 2 may alternatively be indicated by the network device. For example, the network device may send first indication information (for example, in a multicast or broadcast manner). The first indication information may indicate Table 1 or Table 2. In other words, the first indication information may indicate a correspondence between a service type and a priority.

In addition to the service type, some factors may also affect a network access delay of a service. For example, a quantity of devices of a same type that need to access the network increases per unit time. In this case, even if the service type does not change, because the quantity of devices of the same type that need to access the network per unit time increases, a probability that a collision (collision) occurs when the devices access the network increases. In other words, some devices are delayed to access the network. The "collision" means that the plurality of devices simultaneously access the network on a same resource. It may also be considered that the resource used for network access conflicts because the plurality of devices simultaneously access the network.

Therefore, as an alternative solution, in some other embodiments, a priority parameter may represent a priority of a service. The priority parameter may include some parameters of the service, for example, a delay tolerance value, a data amount, or a network access frequency. The priority parameter may also include some parameters that affect network access, for example, a quantity (namely, activeness) of devices of a same type that need to access the network per unit time (for example, per second) in a cell (cell), or a quantity of terminal devices. Certainly, the priority parameter may alternatively include various combinations of the foregoing plurality of parameters. For example, the priority parameter may include the delay tolerance value and the data amount. For another example, the priority parameter may include the delay tolerance value, the network access frequency, the activeness, and the like. It should be noted that the priority parameter is merely an example. Types and a quantity of priority parameters are not limited in this embodiment of this application. In some embodiments, the priority parameter may further include more parameters, for example, a special user identity document (identity document, ID) and an emergency access indication, provided that the network access priority of the service can be represented.

There are a plurality of priority parameters of the service. In a possible implementation, the priority of the service may be determined based on some or all of the priority parameters of the service. For example, the plurality of priority parameters of the service may be ranked, and a priority parameter that is ranked first is preferentially used to determine the priority of the service. For example, the priority parameter of the service includes the delay tolerance value, the network access frequency, the data amount, and the activeness. The priority of the service may be preferentially determined based on the delay tolerance value, the network access frequency, the data amount, or the activeness through negotiation or agreement. For example, there are two services, and the two services are a second service and a third service respectively. A priority parameter of each of the second service and the third service includes a delay tolerance value, a network access frequency, a data amount, and an activeness. It is assumed that the delay tolerance value of the second service is higher than the delay tolerance value of the third service, and the network access frequency of the second service is higher than the network access frequency of the third service. If it is agreed that the priority of the service is preferentially determined based on the delay tolerance value, even if the network access frequency of the second service is higher than the network access frequency of the third service, a priority of the second service is lower than a priority of the third service.

For another example, respective weights may be allocated to the plurality of priority parameters of the service, and the priority of the service may be determined based on some or all of the priority parameters. For example, the priority parameter of the service includes the delay tolerance value, the network access frequency, the data amount, and the activeness. Weights corresponding to the delay tolerance value, the network access frequency, the data amount, and the activeness are respectively A, B, C, and D. In this case, the priority of the service may be determined based on A *the delay tolerance value, B*the network access frequency, C*the data amount, and D* the activeness. Specific values of A, B, C, and D are not limited in embodiments of this application. "*" indicates multiplication.

For example, Table 3 shows a correspondence between a priority parameter and a priority. In Table 3, an example in which the priority parameter includes the delay tolerance value, the network access frequency, and the activeness is used.

**Table 3**

| Delay tolerance value | Network access frequency | Activeness | Priority |
|---|---|---|---|
| 1 ms | 10/s | 100/s/cell | 0 |
| 10 ms | 10/s | 100/s/cell | 1 |
| 10 ms | 1/s | 10/s/cell | 2-1 |
| 20 ms | 1/s | 2/s/cell | 2-2 |
| 100 ms | 1/s | 100/s/cell | 2-3 |
| 200 ms | 1/s | 100/s/cell | 2-4 |
| 500 ms | 10⁻²/s | 100/s/cell | 2-5 |
| 5s | 5x10⁻⁴/s | 1/s/cell | 3-4 |
| 100 ms | 3/s | 10/s/cell | 3-3 |
| 50 ms | 1/s | 100/s/cell | 3-2 |
| 20 ms | 10⁻²/s | 1/s/cell | 3-1 |
| 100 ms | 1/s | 10/s/cell | 3 |

A value range in Table 3 is merely an example, and a correspondence between a value range corresponding to each priority parameter and a priority is also an example. In a possible implementation, Table 3 may be predefined, and the terminal device may determine the priority of the first service based on one or more priority parameters of the first service. In another possible implementation, the network device may send Table 3 to the terminal device. For example, the network device sends second indication information to the terminal device, where the second indication information indicates Table 3. In other words, the second indication information indicates a correspondence between a priority parameter and a priority.

As described above, the terminal device determines the priority of the first service based on Table 1, Table 2, or Table 3. In an alternative solution, the network device may determine the priority of the first service, and notify the terminal device of the priority. For example, the network device may obtain a type of the terminal device, and determine the priority of the first service based on the type of the terminal device. The type of the terminal device may represent a type of the service performed by the terminal device. For example, if the type of the terminal device is a sensing type, it may be considered that the service performed by the terminal device is a sensing service. Compared with the terminal device, the network device may know some priority parameters of the service in advance, for example, the quantity of devices of the same type that request to access the network per unit time, namely, the activeness. Therefore, the network device can also determine the priority of the first service. After determining the priority of the first service, the network device may send indication information to the terminal device, where the indication information indicates the priority of the first service. Because the network device determines the priority of the first service, the network device does not need to send the correspondence shown in Table 1, Table 2, or Table 3 to the terminal device, thereby reducing overheads.

In a possible implementation, the network device may notify the terminal device of one or more priority parameters of the first service, and the terminal device may determine the priority of the first service based on the one or more priority parameters notified by the network device. For example, the network device may notify the terminal device of all priority parameters of the first service. In this case, the terminal device may determine the priority of the first service based on the priority parameters notified by the network device and the correspondence between a priority and a priority parameter. Alternatively, the network device may notify the terminal device of some priority parameters of the first service, for example, the activeness. The terminal device may obtain the some priority parameters of the first service. In this case, because the network device needs to notify the terminal device of only some priority parameters of the first service that cannot be obtained, overheads of sending data by the network device can be reduced.

In addition, the priority parameter may change, for example, the activeness changes, but the terminal device does not know a change of the activeness. In this case, when determining that the activeness changes, the network device may notify the terminal device, so that the terminal device more accurately determines the priority of the first service based on a latest priority parameter, and a probability that a collision occurs during network access may be reduced. For example, the network device may send third indication information to the terminal device, where the third indication information includes one or more priority parameters. It should be understood that the priority parameters included in the third indication information are changed priority parameters, so that signaling overheads are reduced as much as possible. Alternatively, when determining that a priority parameter changes, the network device may update Table 3, and send an updated Table 3 to the terminal device. For example, the network device sends fourth indication information to the terminal device, where the fourth indication information indicates the updated Table 3. To be specific, the network device updates the correspondence between a priority parameter and a priority based on the changed priority parameter, and the fourth indication information indicates an updated correspondence between a priority parameter and a priority. The terminal device more accurately determines the priority of the first service based on a latest Table 3, thereby reducing a probability that a collision occurs during network access.

S402: The network device sends configuration information to the terminal device, and correspondingly, the terminal device receives the configuration information, where the configuration information indicates a network access resource.

The network device may configure a network access resource for each terminal device. For example, the network device may broadcast the configuration information. In this way, each terminal device may learn of the network access resource configured by the network device. The network access resource includes a plurality of access resource sets, and different access resource sets include different quantities of resources. In other words, the network device may allocate different quantities of access resources to services of different priorities. For example, more access resources are allocated to a service with a higher priority, and fewer access resources are allocated to a service with a lower priority. For example, the access resource configured by using the configuration information includes a first access resource set, a second access resource set, and a third access resource set. Alternatively, the access resource configured by using the configuration information may further include more access resource sets. A quantity of access resource sets configured by the network device is not limited in this embodiment of this application. It should be understood that different access resource sets include different quantities of resources. For example, the first access resource set and the second access resource set include different quantities of resources, the second access resource set and the third access resource set include different quantities of resources, and the first access resource set and the third access resource set also include different quantities of resources. Different access resource sets are used for services with different priorities to access the network. For example, the priority of the first service corresponds to the first access resource set, a priority of a second service corresponds to the second access resource set, and a priority of a third service corresponds to the third access resource set. If the priority of the first service is higher than the priority of the second service, a quantity of resources included in the first access resource set is greater than a quantity of resources included in the second access resource set. Similarly, if the priority of the second service is higher than the priority of the third service, the quantity of resources included in the second access resource set is greater than a quantity of resources included in the third access resource set. Because a service with a higher priority may obtain more access resources, the service with a higher priority has a higher probability of quickly accessing the network, to reduce a delay of accessing the network by the service with a higher priority. In addition, access resources are appropriately allocated to services with different priorities, so that the services with different priorities can access the network in an orderly manner, thereby improving overall service efficiency.

An execution sequence of S402 and S401 is not limited. S402 may be performed after S401, or may be performed before S401.

In this embodiment of this application, the network access resource may be a time domain resource, a frequency domain resource, a space domain resource, or another orthogonal domain resource. Time domain parameters, frequency parameters, and one or more of space domain parameters or other orthogonal domain parameters of resources included in different access resource sets are different. In other words, the access resource may be one or a combination of a plurality of resources in the time domain resource, the frequency domain resource, the space domain resource, and the another orthogonal domain resource. For ease of understanding, the following describes implementation forms of different access resource sets with reference to the accompanying drawings.

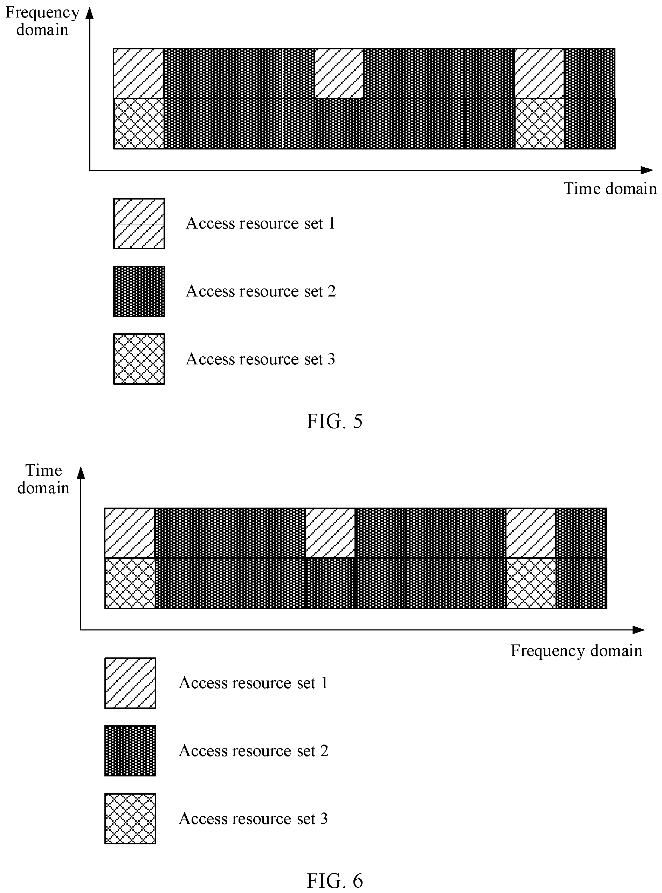

FIG. 5 shows an allocation manner of a plurality of access resource sets. In FIG. 5, an example in which an access resource is a time domain resource is used, and a granularity of the time domain resource in FIG. 5 is a slot.

The network device may divide access resources in a slot allocation manner, and divide the access resources into a plurality of access resource sets. For example, compared with a service with a low priority, a service with a high priority may be allocated with more slots by the network device. As shown in FIG. 5, the network device divides the access resources into three access resource sets, namely, an access resource set 1, an access resource set 2, and an access resource set 3. It can be learned from FIG. 5 that a quantity of slots included in the access resource set 1 is greater than a quantity of slots included in the access resource set 3, and is less than a quantity of slots included in the access resource set 2. In a possible implementation, a priority of an access resource set may be distinguished by using an average spacing between adjacent resource elements included in the access resource set in time domain. The average spacing between adjacent resource elements included in the access resource set in time domain may be considered as an average value of spacings between all adjacent resource elements in time domain. For example, an average spacing between adjacent resource elements included in the first access resource set in time domain is a first spacing, an average spacing between adjacent resource elements included in the second access resource set in time domain is a second spacing. If the first spacing is greater than the second spacing, a service priority corresponding to the first access resource set is lower than a service priority corresponding to the second access resource set. For example, as shown in FIG. 5, adjacent resource elements in the access resource set 1 are spaced by three slots in time domain, and adjacent resource elements in the access resource set 3 are spaced by seven slots in time domain. The access resource set 1 may be used for access of a service with a higher priority, and the access resource set 3 may be used for access of a service with a lower priority. It should be noted that, in FIG. 5, an example in which adjacent resource elements in the access resource sets have a same spacing in time domain is used. In this embodiment of this application, whether adjacent resources in the access resource sets have a same spacing in time domain is not limited. In other words, the adjacent resources in the access resource sets may have different spacings in time domain.

FIG. 6 shows another allocation manner of a plurality of access resource sets. In FIG. 6, an example in which an access resource is a frequency domain resource is used. Similar to FIG. 5, the network device may divide access resources into a plurality of access resource sets in frequency domain. For example, compared with a service with a low priority, a service with a high priority may be allocated with more frequency resources by the network device. As shown in FIG. 6, the network device divides the access resources into three access resource sets, namely, an access resource set 1, an access resource set 2, and an access resource set 3. It can be learned from FIG. 6 that a quantity of frequency resources included in the access resource set 1 is greater than a quantity of frequency resources included in the access resource set 3, and is less than a quantity of frequency resources included in the access resource set 2. In a possible implementation, a priority of an access resource set may be distinguished by using an average spacing between adjacent resource elements included in the access resource set in frequency domain. The average spacing between adjacent resource elements included in the access resource set in frequency domain may be considered as an average value of spacings between all adjacent resource elements in frequency domain. For example, an average spacing between adjacent resource elements included in the first access resource set in frequency domain is a third spacing, an average spacing between adjacent resource elements included in the second access resource set in frequency domain is a fourth spacing. If the third spacing is greater than the fourth spacing, a service priority corresponding to the first access resource set is lower than a service priority corresponding to the second access resource set. For example, as shown in FIG. 6, adjacent resources in the access resource set 1 are spaced by three frequency units in time domain, and adjacent resources in the access resource set 3 are spaced by seven frequency units in time domain. The access resource set 1 may be used for access of a service with a higher priority, and the access resource set 3 may be used for access of a service with a lower priority. It should be noted that, in FIG. 6, an example in which adjacent resource elements in the access resource sets have a same spacing in frequency domain is used. In this embodiment of this application, whether adjacent resource elements in the access resource sets have a same spacing in frequency domain is not limited. In other words, the adjacent resource elements in the access resource sets may have different spacings in frequency domain.

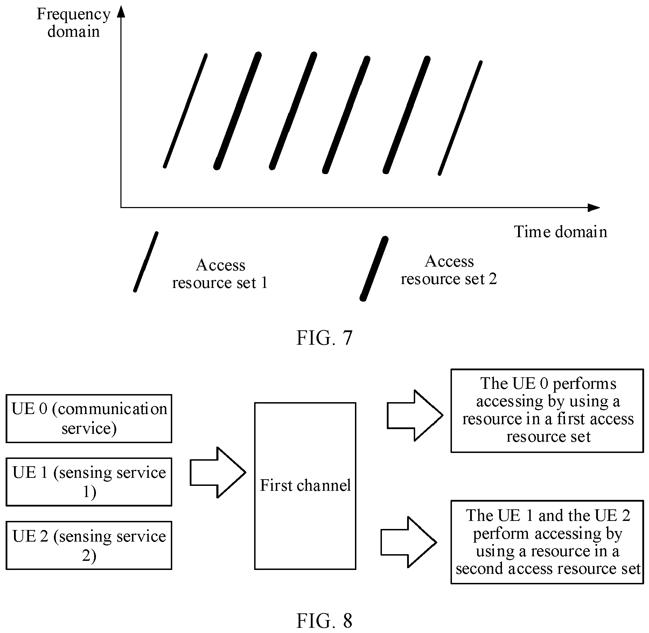

FIG. 7 shows another allocation manner of a plurality of access resource sets. In FIG. 7, an example in which an access resource is a space domain resource is used, and a granularity of the access resource in FIG. 7 is a codeword. Similar to FIG. 5, the network device may divide access resources into a plurality of access resource sets in space domain. For example, compared with a service with a low priority, a service with a high priority may be allocated with more space domain resources, namely, more codewords, by the network device. In a possible implementation, a priority of an access resource set may be distinguished by using an average spacing between adjacent resource elements included in the access resource set in space domain. The average spacing between adjacent resource elements included in the access resource set in space domain may be considered as an average value of spacings between all adjacent resource elements in space domain. For example, an average spacing between adjacent resource elements included in the first access resource set in space domain is a fifth spacing, an average spacing between adjacent resources included in the second access resource set in space domain is a sixth spacing. If the fifth spacing is greater than the sixth spacing, a service priority corresponding to the first access resource set is lower than a service priority corresponding to the second access resource set. As shown in FIG. 7, the network device divides the access resources into two access resource sets, namely, an access resource set 1 and an access resource set 2. It can be learned from FIG. 7 that a quantity of codewords included in the access resource set 1 is less than a quantity of codewords included in the access resource set 2. Adjacent resource elements in the access resource set 1 are spaced by four codewords in space domain, and adjacent resource elements in the access resource set 2 are spaced by one codeword in space domain. The access resource set 1 may be used for access of a service with a lower priority, and the access resource set 2 may be used for access of a service with a higher priority. It should be noted that, in FIG. 7, an example in which adjacent resource elements in the access resource sets have a same spacing in space domain is used. In this embodiment of this application, whether adjacent resource elements in the access resource sets have a same spacing in space domain is not limited. In other words, the adjacent resource elements in the access resource sets may have different spacings in space domain.

In some embodiments, the configuration information may indicate a plurality of access resource sets. The configuration information may include a plurality of position sets, and each position set corresponds to one access resource set. Each position set includes a plurality of positions, and each position may be used to indicate one or more of a time domain position, a frequency domain position, and a space domain position of a resource element included in each access resource set.

In some other embodiments, the configuration information may include start positions of access resources corresponding to different service priorities and access time periods corresponding to different service priorities. For example, there are three service priorities, where start positions of access resources corresponding to two service priorities are the same, and access time periods respectively corresponding to the two service priorities are a plurality of time domain positions of the access resources respectively corresponding to the two service priorities. Alternatively, as shown in FIG. 5 to FIG. 7, spacings between adjacent resource elements in access resource sets corresponding to services of different priorities may be specified, and the configuration information may indicate an initial access resource corresponding to each service priority. A resource other than the access resources corresponding to the two service priorities in the access resources configured by the network device is an access resource of the third service priority. The terminal device receives the configuration information and may determine, based on the configuration information, an access resource set corresponding to a to-be-accessed service.

After determining the priority of the first service, the terminal device may determine an access resource that matches the priority of the first service, to access the network. In some embodiments, the correspondence between a priority and an access resource set may be predefined, or the network device may indicate the correspondence between a priority and an access resource set. For example, the network device may broadcast the correspondence between a priority and an access resource set. After determining the priority of the first service, the terminal device may determine, based on the correspondence, the access resource set that matches the first service.

S403: The terminal device monitors a first channel or a second channel.

S404: The terminal device determines the first access resource set based on the priority of the first service.

S405: The terminal device accesses the network based on a resource in the first access resource set.

In this embodiment of this application, a plurality of services (terminal devices) may use a contention access procedure with a same address, or may use different contention access procedures with a plurality of addresses. If a plurality of terminal devices use a contention access procedure with a same address, it may be considered that the plurality of terminal devices share one channel, for example, the first channel. If a plurality of terminal devices use different contention access procedures with a plurality of addresses, different channels (for example, a first channel and a second channel) may be used to carry the correspondence between a priority and an access resource set. For ease of description, in this embodiment of this application, an example in which the first channel is a channel shared by terminal devices of a plurality of types and the second channel is a channel dedicated to a terminal device of a specific type is used. Certainly, the terminal device of the specific type may also use the first channel. For example, there may be a terminal device of the communication type, a terminal device of the sensing type, and a terminal device of the integrated sensing and communication type. The terminal device of the communication type, the terminal device of the sensing type, and the terminal device of the integrated sensing and communication type all may monitor the first channel. The terminal device of the sensing type and the terminal device of the integrated sensing and communication type may monitor the second channel. It should be noted that, for the terminal device of the integrated sensing and communication type, it may be considered that a sensing function is integrated into a terminal device of the communication type, or a communication function is integrated into a terminal device of the sensing type. The terminal device of the integrated sensing and communication type may be used as a terminal device of the communication type, and may also be used as a terminal device of the sensing type. In a possible implementation, if the terminal device of the integrated sensing and communication type determines that a to-be-performed service is a communication service, the terminal device may monitor the first channel. If the terminal device of the integrated sensing and communication type determines that a to-be-performed service is a sensing service, the terminal device may monitor the first channel or the second channel.

The first channel may be used to carry first information, and the first information indicates a correspondence between a priority and an access resource set. Similarly, the second channel may be used to carry second information, and the second information indicates a correspondence between a priority and an access resource set.

Before accessing the network, the terminal device may determine a type of the terminal device, and determine, based on the type, to monitor the first channel or monitor the second channel. For example, the terminal device may read a type parameter of the terminal device, and determine the type of the terminal device based on the type parameter. If the terminal device is a terminal device of the communication type, the terminal device may monitor the first channel. If the terminal device is a terminal device of the sensing type, the terminal device may monitor the first channel or the second channel. Similarly, if the terminal device is a terminal device of the integrated sensing and communication type, the terminal device may monitor the first channel or the second channel.

In some embodiments, the network device broadcasts the first channel, and regardless of a type of a terminal device that monitors the first channel, the terminal device may obtain the correspondence between a priority and an access resource set. In other words, a plurality of services contend for accessing the network by using a same address. Because the network device broadcasts the first channel, the correspondence that is carried on the first channel and that is between a priority and an access resource set needs to meet services of various types. For example, a communication service needs to be met, and a sensing service also needs to be met. Therefore, in the correspondence between a priority and an access resource set, the priority includes both a priority of the communication service and a priority of the sensing service.

For example, FIG. 8 is a schematic diagram in which a plurality of services contend for accessing the network by using a same address. In FIG. 8, an example in which three terminal devices perform two services is used. The three terminal devices are UE 0, UE 1, and UE 2 respectively. A type of the UE 0 is the communication type, that is, a service performed by the UE 0 is a communication service. A type of the UE 1 is the sensing type, that is, a service performed by the UE 1 is, for example, a sensing service 1. A type of the UE 2 is the sensing type, that is, a service performed by the UE 2 is, for example, a sensing service 2. The UE 0, the UE 1, and the UE 2 contend for accessing the network by using a same address. In other words, the UE 0, the UE 1, and the UE 2 monitor a same channel, to obtain a correspondence between a service priority and an access resource set. An access procedure in an existing NR system may be compatible. A difference from the NR access procedure lies in that in a network access process, a to-be-used access resource set is determined by UE based on a service priority, and then the network is accessed by using a resource in the determined access resource set. For example, the service performed by the UE 0 is a communication service, and therefore, a priority of the UE 0 is the highest. Both the UE 1 and the UE 2 perform sensing services. It is assumed that a priority of the sensing service 1 is higher than a priority of the sensing service 2. In this case, access resources of the UE 1 are more than access resources of the UE 2 and less than access resources of the UE 0. Because the LTE 0 has more access resources, the UE 0 may preferentially access the network. Because services of different types contend for accessing the network by using the same address, the access procedure of the existing NR system does not need to be changed. The network device allocates different quantities of access resources to services (terminal devices) with different priorities. A service with a higher priority corresponds to more access resources, and may preferentially access the network. In this way, service experience is improved. In addition, the services with the priorities access the network on the corresponding access resources, so that a probability of a collision and a failure rate of accessing the network can be reduced as much as possible.

In some other embodiments, the network device broadcasts the first channel and the second channel. In other words, a plurality of services contend for accessing the network by using a plurality of different addresses. The terminal device of the communication type, the terminal device of the sensing type, and the terminal device of the integrated sensing and communication type all may monitor the first channel. The terminal device of the sensing type and the terminal device of the integrated sensing and communication type may monitor the second channel. Because the correspondence that is carried on the second channel and that is between a priority and an access resource set does not need to meet the service of the communication type, in the correspondence that is carried on the second channel and that is between a priority and an access resource set, the priority may not include the priority of the communication service. For ease of distinguishing, in this embodiment of this application, when the priority of the communication service is included, the correspondence between a priority and an access resource set is referred to as a first correspondence between a priority and an access resource set, and when the priority of the communication service is not included, the correspondence between a priority and an access resource set is referred to as a second correspondence between a priority and an access resource set. In other words, the first correspondence between a priority and an access resource set may be carried on the first channel, and the second correspondence between a priority and an access resource set may be carried on the second channel. It should be understood that, because the second correspondence may not include the priority of the communication service, a quantity of priorities in the second correspondence is less than a quantity of priorities in the first correspondence. In this way, overheads of the second channel can be reduced. In this embodiment of this application, the first correspondence between a priority and an access resource set may also be carried on the second channel.

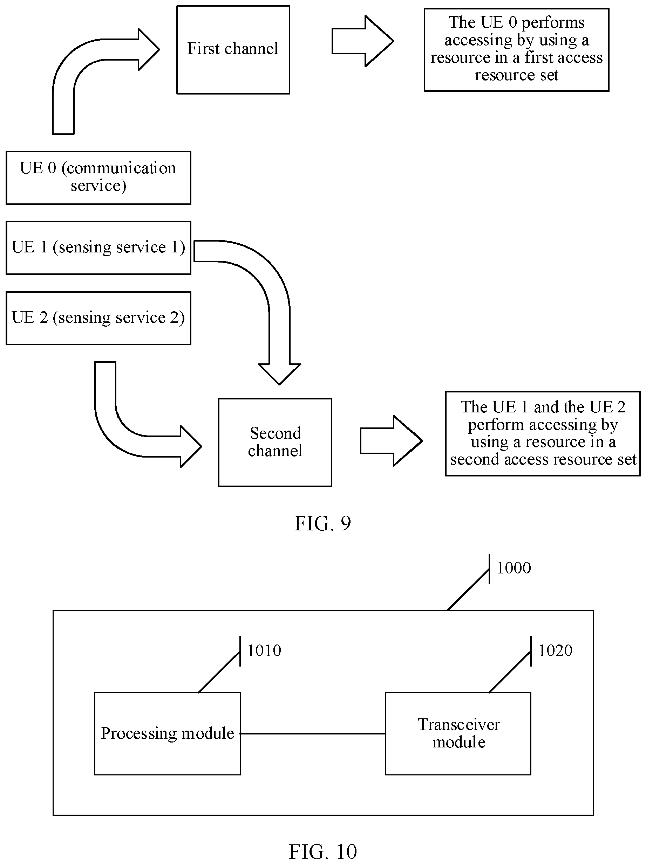

FIG. 9 is a schematic diagram in which a plurality of services contend for accessing the network by using a plurality of different addresses. A difference between FIG. 9 and FIG. 8 lies in that the network device may broadcast the first channel and the second channel, that is, the network device broadcasts different channels used for access by terminal devices of different types. In FIG. 9, an example in which three terminal devices perform two services is also used. The three terminal devices are UE 0, UE 1, and UE 2 respectively. A type of the UE 0 is the communication type, that is, a service performed by the UE 0 is a communication service. A type of the UE 1 is the sensing type, that is, a service performed by the UE 1 is, for example, a sensing service 1. A type of the UE 2 is the sensing type, that is, a service performed by the UE 2 is, for example, a sensing service 2. The UE 0, the UE 1, and the UE 2 contend for accessing the network by using a plurality of different addresses. It may be considered that the network device side logically divides access resources. In other words, there are two access procedures. A terminal device of a conventional service, for example, the terminal device of the communication type, uses the existing NR access procedure. A terminal device of a service of a new type, for example, the terminal device of the integrated sensing and communication type, uses another access procedure, for example, performs accessing based on a sounding reference signal (sounding reference signal, SRS). In other words, services with different priorities have corresponding access procedures, and corresponding access resources are obtained from the corresponding procedures to access the network. Because the services with different priorities are separated from each other in terms of procedure, it is more convenient to manage orderly access of the services with different priorities to the network. In addition, when the terminal device of the sensing type or the integrated sensing and communication type accesses the network for a sensing service, it is unnecessary to perform an entire conventional network access procedure. This further reduces network access time.

In a network access process, a terminal device determines, based on a device type, whether to monitor the first channel or the second channel. For example, the type of the UE 0 is the communication type, and the types of the UE 1 and the UE 2 each are the sensing type. Therefore, the UE 0 monitors the first channel, and the UE 1 and the UE 2 monitor the second channel. The UE 0 monitors the first channel to obtain the correspondence between a service priority and an access resource set, and the UE 1 and the UE 2 monitor the second channel to obtain the correspondence between a service priority and an access resource set. It is assumed that a priority of the sensing service 1 is higher than a priority of the sensing service 2. In this case, access resources of the UE 1 are more than access resources of the UE 2 and less than access resources of the UE 0. Because the UE 0 has more access resources, the UE 0 may preferentially access the network. In other words, an access delay of the UE 0 is the shortest, an access delay of the UE 1 is the second shortest, and access time of the UE 2 is the longest.

S403 may be performed before S401. The terminal device monitors the first channel or the second channel, to obtain the correspondence between a priority and an access resource set, and then determines the first access resource set based on the correspondence and the priority of the first service. In addition, in this embodiment of this application, if the priority parameter of the service changes, the network device may notify the terminal device of a changed priority parameter by sending third indication information or fourth indication information to the terminal device. The third indication information or the fourth indication information may also be carried on the first channel or the second channel. In other words, the network device sends the first channel and/or the second channel, where the first channel may carry the third indication information or the fourth indication information, and the second channel may also carry the third indication information or the fourth indication information.

Considering that the terminal device accesses the network based on a resource in an initially determined access resource set, it is inevitable that the terminal device still collides with another device. To reduce a network access delay of the terminal device as much as possible, the terminal device may access the network by using an access resource corresponding to a priority higher than a current priority. For example, if the terminal device accesses the network by using the resource in the first access resource set, and finds that a quantity of collisions between the terminal device and another terminal device is greater than or equal to a preset threshold within preset duration, the terminal device may increase the corresponding priority by one level, that is, increase the priority of the first service by one level. The example in Table 3 is still used. A service currently performed by the terminal device is vehicle positioning, and a probability of a collision with another terminal device is high when the network is accessed by using an access resource in an access resource set corresponding to vehicle positioning. In this case, the terminal device may access the network by using an access resource corresponding to train positioning. In other words, the terminal device may increase the current priority by one level. It should be noted that the preset threshold may be predefined, or may be indicated by the network device.

On the contrary, the terminal device accesses the network based on the resource in the initially determined access resource set, and finds that a probability of a collision with another device is low. In this case, to reduce resources, the terminal device may access the network by using an access resource corresponding to a priority lower than a priority of a current service. For example, if the terminal device accesses the network by using the resource in the first access resource set, and finds that a quantity of collisions between the terminal device and another terminal device is less than or equal to a preset threshold within preset duration, the terminal device may decrease the corresponding priority by one level, that is, decrease the priority of the first service by one level. The example in Table 3 is still used. A service currently performed by the terminal device is vehicle positioning, and a probability of a collision with another terminal device is low when the network is accessed by using an access resource in an access resource set corresponding to vehicle positioning. In this case, the terminal device may access the network by using an access resource corresponding to human positioning. In other words, the terminal device may decrease the current priority by one level. It should be noted that the preset threshold may be predefined, or may be indicated by the network device.

In this embodiment of this application, different access resources are allocated based on features of different services, for example, delay requirements. For example, the network device allocates different quantities of access resources to services (terminal devices) with different priorities. A service with a higher priority corresponds to more access resources, and may preferentially access the network. In this way, service experience is improved. In addition, the services with the priorities access the network on the corresponding access resources, so that a probability of a collision and a failure rate of accessing the network can be reduced as much as possible.

Services of a plurality of types may contend for accessing the network by using a same address, the access procedure of the existing NR system does not need to be changed. Services of a plurality of types may contend for accessing the network by using a plurality of different addresses. Services with different priorities have corresponding access procedures, and corresponding access resources are obtained from the corresponding procedures to access the network. Because the services with different priorities are separated from each other in terms of procedure, it is more convenient to manage orderly access of the services with different priorities to the network.

The foregoing embodiments provided in this application separately describe the method provided in embodiments of this application from a perspective of interaction between the terminal device and the network device. The steps performed by the network device may also be separately implemented by different communication apparatuses. For example, a first apparatus is configured to determine a plurality of access resource sets, and a second apparatus is configured to send configuration information indicating the plurality of access resource sets. In other words, the first apparatus and the second apparatus jointly complete the steps performed by the network device in embodiments of this application. A specific division manner is not limited in this application. When the network architecture includes one or more distributed units (distributed units, DU), one or more central units (central units, CU), and one or more radio frequency units (RU), the steps performed by the network device may be separately implemented by the DU, the CU, and the RU. To implement the functions in the method provided in embodiments of this application, the terminal device and the network device each may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

Based on a same invention concept as that of the method embodiments, an embodiment of this application provides a communication apparatus. The following describes, with reference to the accompanying drawings, a communication apparatus for implementing the method in embodiments of this application.

FIG. 10 is a schematic block diagram of a communication apparatus 1000 according to an embodiment of this application. The communication apparatus 1000 may include a processing module 1010 and a transceiver module 1020. Optionally, a storage unit may be further included. The storage unit may be configured to store instructions (code or a program) and/or data. The processing module 1010 and the transceiver module 1020 may be coupled to the storage unit. For example, the processing module 1010 may read the instructions (the code or the program) and/or the data in the storage unit, to implement a corresponding method. The foregoing units may be independently disposed, or may be partially or completely integrated.

In some possible implementations, the communication apparatus 1000 can correspondingly implement behavior and functions of the terminal device in the foregoing method embodiments, for example, implement the method performed by the terminal device in the embodiment in FIG. 4. For example, the communication apparatus 1000 may be a terminal device, a component (for example, a chip or a circuit) used in a terminal device, a chip or a chip set in a terminal device, or a part that is of a chip and that is configured to perform a related method function. The transceiver module 1020 may be configured to perform all receiving or sending operations performed by the terminal device in the embodiment shown in FIG. 4, for example, S402 in the embodiment shown in FIG. 4, and/or another process used to support the technology described in this specification. The processing module 1010 is configured to perform all operations performed by the terminal device in the embodiment shown in FIG. 4 except the receiving and sending operations, for example, S401, S403, S404, and S405 in the embodiment shown in FIG. 4, and/or another process used to support the technology described in this specification.

In some embodiments, the transceiver module 1020 is configured to: monitor a first channel or a second channel based on a type of the communication apparatus 1000; and when the type of the communication apparatus 1000 is a sensing type or an integrated sensing and communication type, monitor, by the communication apparatus 1000, the first channel or the second channel; or when the type of the communication apparatus is a communication type, monitor, by the communication apparatus 1000, the first channel. The processing module 1010 is configured to: determine a first access resource set based on a priority of a first service, and access a network based on a result of monitoring the first channel or the second channel and a resource in the first access resource set, where different priorities correspond to different access resource sets, at least one of the following priority parameters of services with different priorities is different: a delay tolerance value, a data amount, a network access frequency, a quantity of terminal devices, or an activeness, and the activeness is a quantity of devices of a same type that need to access the network per unit time.

In a possible implementation, the first channel is used to carry first information, and the first information indicates a first correspondence between a priority and an access resource set. The second channel is used to carry second information, and the second information indicates a second correspondence between a priority and an access resource set.

In a possible implementation, before the processing module 1010 determines the first access resource set based on the priority of the first service, the transceiver module 1020 is further configured to obtain first indication information, where the first indication information indicates the priority of the first service, or the first indication information indicates one or more priority parameters. Alternatively, before the processing module 1010 determines the first access resource set based on the priority of the first service, the processing module 1010 is further configured to determine the priority of the first service based on a priority parameter of the first service and a third correspondence, where the third correspondence is a correspondence between a priority and a priority parameter.

In a possible implementation, the transceiver module 1020 is further configured to obtain second indication information, where the second indication information indicates the third correspondence.

In a possible implementation, the transceiver module 1020 is further configured to obtain third indication information, where the third indication information indicates a fourth correspondence, and the fourth correspondence is obtained by updating the third correspondence based on one or more priority parameters that change in the at least one priority parameter.

In a possible implementation, the transceiver module 1020 is further configured to obtain configuration information, where the configuration information indicates a plurality of access resource sets, and the plurality of access resource sets include the first access resource set and a second access resource set. The first access resource set and the second access resource set meet: An average spacing between adjacent resource elements included in the first access resource set is a first spacing, an average spacing between adjacent resource elements included in the second access resource set is a second spacing, the first spacing is greater than the second spacing, and a priority corresponding to the first access resource set is lower than a priority corresponding to the second access resource set.

In a possible implementation, the processing module 1010 is further configured to: when the network is accessed by using the resource in the first access resource set, if it is determined that a quantity of collisions with another terminal device within preset duration is greater than or equal to a first preset threshold, increase the priority of the first service by one level within a preset priority range.

In a possible implementation, the processing module 1010 is further configured to: when the network is accessed by using the resource in the first access resource set, if it is determined that a quantity of collisions with another terminal device within preset duration is less than or equal to a second preset threshold, decrease the priority of the first service by one level within a preset priority range.

In some possible implementations, the communication apparatus 1000 can correspondingly implement behavior and functions of the network device in the foregoing method embodiments, for example, implement the method performed by the network device in the embodiment in FIG. 4. For example, the communication apparatus 1000 may be a network device, a component (for example, a chip or a circuit) used in a network device, a chip or a chip set in a network device, or a part that is of a chip and that is configured to perform a related method function. The transceiver module 1020 may be configured to perform all receiving or sending operations performed by the network device in the embodiment shown in FIG. 4, for example, S401 in the embodiment shown in FIG. 4, and/or another process used to support the technology described in this specification. The processing module 1010 is configured to perform all operations performed by the base station in the embodiment shown in FIG. 4 except the receiving and sending operations, and/or another process used to support the technology described in this specification.

In some embodiments, the processing module 1010 is configured to generate a first channel and a second channel, where the first channel is used for a terminal device of a communication type, a sensing type, or an integrated sensing and communication type, the second channel is used for a terminal device of a sensing type or an integrated sensing and communication type, the first channel is used to carry first information, the first information indicates a first correspondence between a priority and an access resource set, the second channel is used to carry second information, and the second information indicates a second correspondence between a priority and an access resource set. The transceiver module 1020 is configured to send the first channel and the second channel.

In a possible implementation, the transceiver module 1020 is further configured to send first indication information, where the first indication information indicates a priority of a first service, or the first indication information indicates at least one priority parameter of a first service, the first service is a service to be performed by the terminal device, the priority parameter includes at least one of the following: a delay tolerance value, a data amount, a network access frequency, a quantity of terminal devices, or an activeness, and the activeness is a quantity of devices of a same type that need to access a network per unit time.

In a possible implementation, the transceiver module 1020 is further configured to send second indication information, where the second indication information indicates a third correspondence between a priority parameter and a priority.

In a possible implementation, the processing module 1010 is further configured to: determine that one or more priority parameters of the first service change, and update the third correspondence to a fourth correspondence based on the one or more changed priority parameters. The transceiver module 1020 is further configured to send third indication information, where the third indication information indicates the fourth correspondence.

In a possible implementation, the transceiver module 1020 is further configured to send configuration information, where the configuration information indicates a plurality of access resource sets, and the plurality of access resource sets include the first access resource set and a second access resource set. The first access resource set and the second access resource set meet: An average spacing between adjacent resource elements included in the first access resource set is a first spacing, an average spacing between adjacent resource elements included in the second access resource set is a second spacing, the first spacing is greater than the second spacing, and a priority corresponding to the first access resource set is lower than a priority corresponding to the second access resource set.

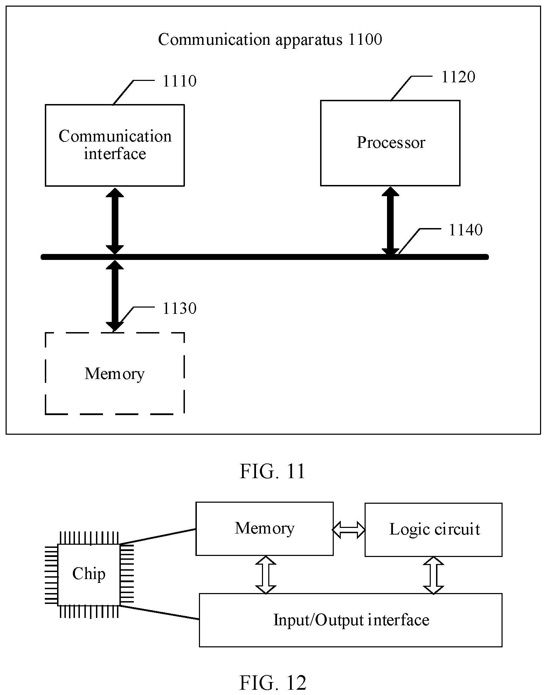

FIG. 11 shows a communication apparatus 1100 according to an embodiment of this application. The communication apparatus 1100 may be a terminal device, and can implement functions of the terminal device in the method provided in embodiments of this application. Alternatively, the communication apparatus 1100 may be a network device, and can implement functions of the network device in the method provided in embodiments of this application. Alternatively, the communication apparatus 1100 may be an apparatus that can support the terminal device in implementing the corresponding functions in the method provided in embodiments of this application, or an apparatus that can support the network device in implementing the corresponding functions in the method provided in embodiments of this application. The communication apparatus 1100 may be a chip system. In this embodiment of this application, the chip system may include a chip, or may include a chip and another discrete component.

In terms of hardware implementation, the transceiver module 1020 may be a transceiver, and the transceiver is integrated into the communication apparatus 1100 to form a communication interface 1110.

The communication apparatus 1100 includes at least one processor 1120, configured to implement or support the communication apparatus 1100 in implementing the functions of the network device (base station) or the terminal device in the method provided in embodiments of this application. For details, refer to detailed description in the method example. Details are not described herein again.

The communication apparatus 1100 may further include at least one memory 1130, configured to store program instructions and/or data. The memory 1130 is coupled to the processor 1120. The coupling in this embodiment of this application may be an indirect coupling or a communication connection between apparatuses, units, or modules in an electrical form, a mechanical form, or another form, and is used for information exchange between the apparatuses, the units, or the modules. The processor 1120 may operate in cooperation with the memory 1130. The processor 1120 may execute the program instructions and/or data stored in the memory 1130, to enable the communication apparatus 1100 to implement a corresponding method. At least one of the at least one memory may be included in the processor. It should be noted that the memory 1130 is not mandatory, and therefore is shown by using a dashed line in FIG. 11.

The communication apparatus 1100 may further include the communication interface 1110, configured to communicate with another device by using a transmission medium, so that the communication interface can be used by an apparatus in the communication apparatus 1100 to communicate with the another device. For example, when the communication apparatus is a terminal, the another device is a network device. Alternatively, when the communication apparatus is a network device, the another device is a terminal. The processor 1120 may send/receive data by using the communication interface 1110. The communication interface 1110 may be specifically a transceiver.

A specific connection medium between the communication interface 1110, the processor 1120, and the memory 1130 is not limited in this embodiment of this application. In this embodiment of this application, the memory 1130, the processor 1120, and the communication interface 1110 are connected to each other through a bus 1140 in FIG. 11. The bus is represented by using a thick line in FIG. 11. This is merely an example for description, and is not used as a limitation. Another component connection manner may be alternatively used. The bus may be classified into an address bus, a data bus, a control bus, and the like. For ease of representation, only one thick line is used to represent the bus in FIG. 11, but this does not mean that there is only one bus or only one type of bus.

In this embodiment of this application, the processor 1120 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware and software modules in the processor.

In this embodiment of this application, the memory 1130 may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

It should be noted that the communication apparatus in the foregoing embodiments may be a terminal, a circuit, a chip used in the terminal, or another combined device, component, or the like that has a function of the terminal. When the communication apparatus is a terminal, the transceiver module may be a transceiver, and may include an antenna, a radio frequency circuit, and the like. The processing module may be a processor, for example, a central processing unit (central processing unit, CPU). When the communication apparatus is a component having a function of the terminal, the transceiver module may be a radio frequency unit, and the processing module may be a processor. When the communication apparatus is a chip system, the communication apparatus may be a field programmable gate array (field programmable gate array, FPGA), an application-specific integrated circuit (application-specific integrated circuit, ASIC), a system on chip (system on chip, SoC), a CPU, a network processor (network processor, NP), a digital signal processor (digital signal processor, DSP), a micro controller unit (micro controller unit, MCU), a programmable logic device (programmable logic device, PLD), or another integrated chip. The processing module may be a processor of the chip system. The transceiver module or the communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another component) and transmit the code instructions to the processor. The processor may be configured to run the code instructions to perform the method in the foregoing method embodiments. For another example, the interface circuit may alternatively be a signal transmission interface circuit between a communication processor and a transceiver. For example, in a sending scenario, the processor is configured to perform XX to obtain Y data (where XX is a non-air interface operation, and includes but is not limited to operations such as determining, judging, processing, calculating, searching, and comparing). The interface circuit may be configured to send the Y data to a transmitter (where the transmitter is configured to perform a sending operation on an air interface). For another example, in a receiving scenario, the interface circuit may be configured to receive Z data from a receiver (where the receiver is configured to perform a receiving operation on an air interface), and send the Z data to the processor. The processor is configured to perform XX processing on the Z data (where XX is a non-air interface operation, and includes but is not limited to operations such as determining, judging, processing, calculating, searching, and comparing).

For example, FIG. 12 shows a possible structure of a chip. The chip includes a logic circuit and an input/output interface, and may further include a memory. The input/output interface may be configured to receive code instructions (where the code instructions are stored in a memory and may be directly read from the memory, or may be read from the memory through another component), and transmit the code instructions to the logic circuit. The logic circuit may be configured to run the code instructions to perform the method in the foregoing method embodiments.

Alternatively, the input/output interface may be a signal transmission interface circuit between the logic circuit and the transceiver. For example, in a sending scenario, the logic circuit is configured to perform XX to obtain Y data (where XX is a non-air interface operation, and includes but is not limited to operations such as determining, judging, processing, calculating, searching, and comparing). The input/output interface may be configured to send the Y data to a transmitter (where the transmitter is configured to perform a sending operation on an air interface). For another example, in a receiving scenario, the input/output interface may be configured to receive Z data from a receiver (where the receiver is configured to perform a receiving operation on an air interface), and send the Z data to the logic circuit. The logic circuit is configured to perform XX processing on the Z data (where XX is a non-air interface operation, and includes but is not limited to operations such as determining, judging, processing, calculating, searching, and comparing).

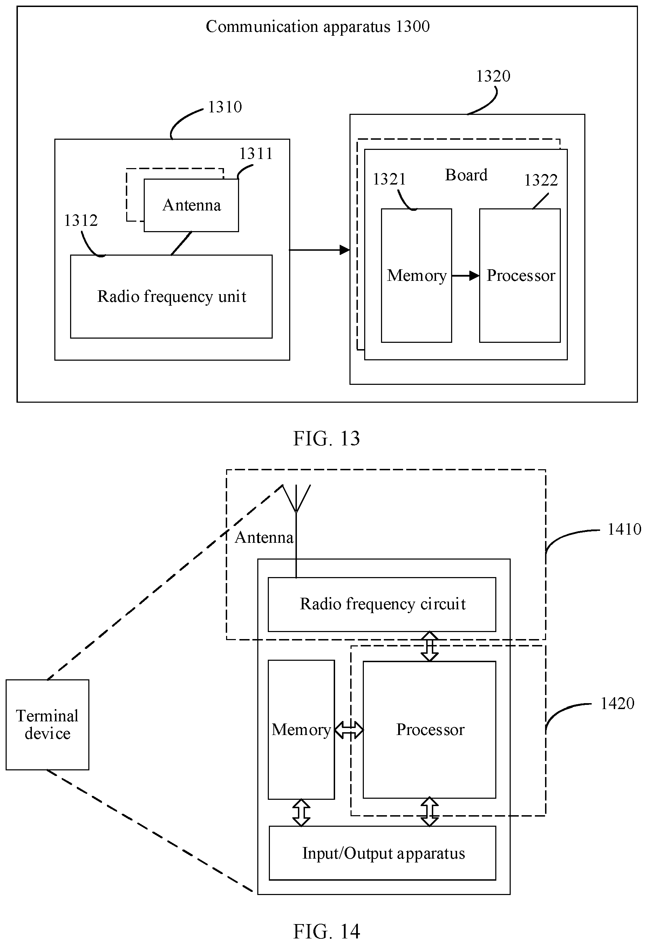

FIG. 13 is a schematic diagram of a simplified structure of a communication apparatus. For ease of understanding and illustration, an example in which the communication apparatus is a base station is used in FIG. 13. The base station may be used in the system shown in FIG. 1, may be the network device in FIG. 1, and performs functions of the network device in the method embodiments.

The communication apparatus 1300 may include a transceiver 1310, a memory 1321, and a processor 1322. The transceiver 1310 may be used by the communication apparatus for communication, for example, configured to send or receive the first indication information, the capability information, or the like. The memory 1321 is coupled to the processor 1322, and may be configured to store a program and data that are necessary for implementing functions of the communication apparatus 1300. The processor 1322 is configured to support the communication apparatus 1300 in performing a corresponding function in the method. The function may be implemented by invoking a program stored in the memory 1321.

Specifically, the transceiver 1310 may be a wireless transceiver, and may be configured to support the communication apparatus 1300 in receiving and sending signaling and/or data through a radio air interface. The transceiver 1310 may also be referred to as a transceiver unit or a communication unit. The transceiver 1310 may include one or more radio frequency units 1312 and one or more antennas 1311. The radio frequency unit, for example, a remote radio unit (remote radio unit, RRU) or an active antenna unit (active antenna unit, AAU), may be specifically configured to transmit a radio frequency signal and perform conversion between a radio frequency signal and a baseband signal. The one or more antennas may be specifically configured to radiate and receive radio frequency signals. Optionally, the transceiver 1310 may include only the radio frequency unit. In this case, the communication apparatus 1300 may include the transceiver 1310, the memory 1321, the processor 1322, and the antenna 1311.

The memory 1321 and the processor 1322 may be integrated, or may be independent of each other. As shown in FIG. 13, the memory 1321 and the processor 1322 may be integrated into a control unit 1320 of the communication apparatus 1300. For example, the control unit 1320 may include a baseband unit (baseband unit, BBU) of an LTE base station, and the baseband unit may also be referred to as a digital unit (digital unit, DU). Alternatively, the control unit 1320 may include a distributed unit (distributed unit, DU) and/or a central unit (central unit, CU) in a base station in 5G and future radio access technologies. The control unit 1320 may include one or more antenna panels. A plurality of antenna panels may jointly support a radio access network (for example, an LTE network) of a single access standard, or a plurality of antenna panels may separately support radio access networks (for example, an LTE network, a 5G network, and another network) of different access standards. The memory 1321 and the processor 1322 may serve one or more antenna panels. In other words, the memory 1321 and the processor 1322 may be separately disposed on each antenna panel. Alternatively, a plurality of antenna panels may share a same memory 1321 and a same processor 1322. In addition, a necessary circuit may be disposed on each antenna panel. For example, the circuit may be configured to implement coupling between the memory 1321 and the processor 1322. The transceiver 1310, the processor 1322, and the memory 1321 may be connected by using a bus (bus) structure and/or another connection medium.

Based on the structure shown in FIG. 13, when the communication apparatus 1300 needs to send data, the processor 1322 may perform baseband processing on the to-be-sent data and output a baseband signal to the radio frequency unit, and the radio frequency unit performs radio frequency processing on the baseband signal and sends a radio frequency signal in a form of an electromagnetic wave through the antenna. When data is sent to the communication apparatus 1300, the radio frequency unit receives a radio frequency signal through the antenna, converts the radio frequency signal into a baseband signal, and outputs the baseband signal to the processor 1322. The processor 1322 converts the baseband signal into data, and processes the data.

Based on the structure shown in FIG. 13, the transceiver 1310 may be configured to perform the steps performed by the transceiver module 1020, and/or the processor 1322 may be configured to invoke instructions in the memory 1321, to perform the steps performed by the processing module 1010.

FIG. 14 is a schematic diagram of a simplified structure of a terminal device. For ease of understanding and illustration, an example in which the terminal device is a mobile phone is used in FIG. 14. As shown in FIG. 14, the terminal device includes a processor, a memory, a radio frequency circuit, an antenna, and an input/output apparatus. The processor is mainly configured to process a communication protocol and communication data, control an on-board unit, execute a software program, process data of the software program, and the like. The memory is mainly configured to store a software program and data. The radio frequency circuit is mainly configured to: perform conversion between a baseband signal and a radio frequency signal, and process the radio frequency signal. The antenna is mainly configured to receive/send a radio frequency signal in a form of an electromagnetic wave. The input/output apparatus, for example, a touchscreen, a display, or a keyboard, is mainly configured to: receive data input by a user and output data to the user. It should be noted that some types of devices may have no input/output apparatus.

When data needs to be sent, the processor performs baseband processing on the to-be-sent data and outputs a baseband signal to the radio frequency circuit, and the radio frequency circuit performs radio frequency processing on the baseband signal and sends the radio frequency signal to the outside in a form of an electromagnetic wave through the antenna. When data is sent to the device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 14 shows only one memory and one processor. In an actual device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have receiving and sending functions may be considered as a transceiver unit of the apparatus, and the processor having a processing function may be considered as a processing unit of the apparatus. As shown in FIG. 14, the apparatus includes a transceiver unit 1410 and a processing unit 1420. The transceiver unit 1410 may also be referred to as a transceiver, a transceiver machine, a transceiver apparatus, or the like. The processing unit 1420 may also be referred to as a processor, a processing board, a processing module, a processing apparatus, or the like. Optionally, a component that is in the transceiver unit 1410 and that is configured to implement a receiving function may be considered as a receiving unit, and a component that is in the transceiver unit 1410 and that is configured to implement a sending function may be considered as a sending unit. In other words, the transceiver unit 1410 includes the receiving unit and the sending unit. The transceiver unit 1410 sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1410 is configured to perform a sending operation and a receiving operation on a terminal device side in the method embodiments, and the processing unit 1420 is configured to perform an operation other than the sending operation and the receiving operation of the terminal device in the method embodiments.

For example, in an implementation, the transceiver unit 1410 may be configured to perform S401 in the embodiment shown in FIG. 4, and/or configured to support another process of the technology described in this specification.

When the communication apparatus is a chip apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes a network device and a terminal device, or may include more network devices and more terminal devices. For example, the communication system includes a network device and a terminal device that are configured to implement related functions in FIG. 4.

The network device is separately configured to implement functions related to a network in FIG. 4. The terminal device is configured to implement functions related to a terminal device in FIG. 4. For details, refer to the related descriptions in the method embodiments. Details are not described herein again.

An embodiment of this application further provides a computer-readable storage medium including instructions. When the instructions are run on a computer, the computer is enabled to perform the method performed by the network device in FIG. 4; or when the instructions are run on a computer, the computer is enabled to perform the method performed by the terminal device in FIG. 4.

An embodiment of this application further provides a computer program product including instructions. When the instructions are run on a computer, the computer is enabled to perform the method performed by the network device in FIG. 4; or when the instructions are run on a computer, the computer is enabled to perform the method performed by the terminal device in FIG. 4.

An embodiment of this application provides a chip system. The chip system includes a processor and may further include a memory, to implement the functions of the network device or the terminal in the foregoing method, or implement the functions of the network device and the terminal in the foregoing method. The chip system may include a chip, or may include a chip and another discrete component.

It should be understood that the terms "system" and "network" may be used interchangeably in embodiments of this application. "At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may represent: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first correspondence and a second correspondence are merely used to distinguish between different correspondences, but do not indicate different priorities, importance degrees, or the like of the two correspondences.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

It is clear that a person skilled in the art can make various modifications and variations to this application without departing from the spirit and scope of this application. This application is intended to cover these modifications and variations of this application provided that they fall within the scope of the following claims and their equivalent technologies.

## Claims

1. A network access method, comprising:
monitoring, by a terminal device, a first channel or a second channel based on a type of the terminal device; and when the type of the terminal device is a sensing type or an integrated sensing and communication type, monitoring, by the terminal device, the first channel or the second channel; or when the type of the terminal device is a communication type, monitoring, by the terminal device, the first channel;
determining, by the terminal device, a first access resource set based on a priority of a first service, wherein different priorities correspond to different access resource sets, at least one of the following priority parameters of services with different priorities is different: a delay tolerance value, a data amount, a network access frequency, a quantity of terminal devices, or an activeness, and the activeness is a quantity of devices of a same type that need to access a network per unit time; and
accessing, by the terminal device, the network based on a result of monitoring the first channel or the second channel and a resource in the first access resource set.

2. The method according to claim 1, wherein the first channel is used to carry first information, and the first information indicates a first correspondence between a priority and an access resource set; and the second channel is used to carry second information, and the second information indicates a second correspondence between a priority and an access resource set.

3. The method according to claim 1 or 2, wherein before the determining, by the terminal device, a first access resource set based on a priority of a first service, the method further comprises:
obtaining, by the terminal device, first indication information, wherein the first indication information indicates the priority of the first service, or the first indication information indicates one or more priority parameters; or
determining, by the terminal device, the priority of the first service based on a priority parameter of the first service and a third correspondence, wherein the third correspondence is a correspondence between a priority and a priority parameter.

4. The method according to claim 3, wherein the method further comprises:
obtaining, by the terminal device, second indication information, wherein the second indication information indicates the third correspondence.

5. The method according to either of claims 3 and 4, wherein the method further comprises:
obtaining, by the terminal device, third indication information, wherein the third indication information indicates a fourth correspondence, and the fourth correspondence is obtained by updating the third correspondence based on one or more priority parameters that change in the at least one priority parameter.

6. The method according to any one of claims 1 to 5, wherein the method further comprises:
obtaining, by the terminal device, configuration information, wherein the configuration information indicates a plurality of access resource sets, the plurality of access resource sets comprise the first access resource set and a second access resource set, and the first access resource set and the second access resource set meet:
an average spacing between adjacent resource elements comprised in the first access resource set is a first spacing, an average spacing between adjacent resource elements comprised in the second access resource set is a second spacing, the first spacing is greater than the second spacing, and a priority corresponding to the first access resource set is lower than a priority corresponding to the second access resource set.

7. A network access method, comprising:
sending, by a network device, a first channel and a second channel, wherein the first channel is used for a terminal device of a communication type, a sensing type, or an integrated sensing and communication type, the second channel is used for a terminal device of a sensing type or an integrated sensing and communication type, the first channel is used to carry first information, the first information indicates a first correspondence between a priority and an access resource set, the second channel is used to carry second information, and the second information indicates a second correspondence between a priority and an access resource set; and
receiving, by the network device, an access request from the terminal device, wherein the access request is used to request to access a network.

8. The method according to claim 7, wherein the method further comprises:
sending, by the network device, first indication information, wherein the first indication information indicates a priority of a first service, or the first indication information indicates at least one priority parameter of a first service, the first service is a service to be performed by the terminal device, the priority parameter comprises at least one of the following: a delay tolerance value, a data amount, a network access frequency, a quantity of terminal devices, or an activeness, and the activeness is a quantity of devices of a same type that need to access the network per unit time.

9. The method according to claim 8, wherein the method further comprises:
sending, by the network device, second indication information, wherein the second indication information indicates a third correspondence between a priority parameter and a priority.

10. The method according to claim 9, wherein the method further comprises:
determining, by the network device, that one or more priority parameters of the first service change, and updating the third correspondence to a fourth correspondence based on the one or more changed priority parameters; and
sending, by the network device, third indication information, wherein the third indication information indicates the fourth correspondence.

11. The method according to any one of claims 7 to 10, wherein the method further comprises:
sending, by the network device, configuration information, wherein the configuration information indicates a plurality of access resource sets, the plurality of access resource sets comprise the first access resource set and a second access resource set, and the first access resource set and the second access resource set meet:
an average spacing between adj acent resource elements comprised in the first access resource set is a first spacing, an average spacing between adjacent resource elements comprised in the second access resource set is a second spacing, the first spacing is greater than the second spacing, and a service priority corresponding to the first access resource set is lower than a service priority corresponding to the second access resource set.

12. A communication apparatus, comprising a transceiver module and a processing module, wherein
the transceiver module is configured to: monitor a first channel or a second channel based on a type of the communication apparatus; and when the type of the communication apparatus is a sensing type or an integrated sensing and communication type, monitor, by the communication apparatus, the first channel or the second channel; or when the type of the communication apparatus is a communication type, monitor, by the communication apparatus, the first channel; and
the processing module is configured to: determine a first access resource set based on a priority of a first service, and access a network based on a result of monitoring the first channel or the second channel and a resource in the first access resource set, wherein different priorities correspond to different access resource sets, at least one of the following priority parameters of services with different priorities is different: a delay tolerance value, a data amount, a network access frequency, a quantity of terminal devices, or an activeness, and the activeness is a quantity of devices of a same type that need to access the network per unit time.

13. The communication apparatus according to claim 12, wherein the first channel is used to carry first information, and the first information indicates a first correspondence between a priority and an access resource set; and the second channel is used to carry second information, and the second information indicates a second correspondence between a priority and an access resource set.

14. The communication apparatus according to claim 12 or 13, wherein before the processing module determines the first access resource set based on the priority of the first service, the transceiver module is further configured to obtain first indication information, wherein the first indication information indicates the priority of the first service, or the first indication information indicates one or more priority parameters; or
before the processing module determines the first access resource set based on the priority of the first service, the processing module is further configured to determine the priority of the first service based on a priority parameter of the first service and a third correspondence, wherein the third correspondence is a correspondence between a priority and a priority parameter.

15. The communication apparatus according to claim 14, wherein the transceiver module is further configured to:
obtain second indication information, wherein the second indication information indicates the third correspondence.

16. The communication apparatus according to either of claims 14 and 15, wherein the transceiver module is further configured to:
obtain third indication information, wherein the third indication information indicates a fourth correspondence, and the fourth correspondence is obtained by updating the third correspondence based on one or more priority parameters that change in the at least one priority parameter.

17. The communication apparatus according to any one of claims 12 to 16, wherein the transceiver module is further configured to:
obtain configuration information, wherein the configuration information indicates a plurality of access resource sets, the plurality of access resource sets comprise the first access resource set and a second access resource set, and the first access resource set and the second access resource set meet:
an average spacing between adjacent resource elements comprised in the first access resource set is a first spacing, an average spacing between adjacent resource elements comprised in the second access resource set is a second spacing, the first spacing is greater than the second spacing, and a priority corresponding to the first access resource set is lower than a priority corresponding to the second access resource set.

18. A communication apparatus, comprising a processing module and a transceiver module, wherein
the processing module is configured to generate a first channel and a second channel, wherein the first channel is used for a terminal device of a communication type, a sensing type, or an integrated sensing and communication type, the second channel is used for a terminal device of a sensing type or an integrated sensing and communication type, the first channel is used to carry first information, the first information indicates a first correspondence between a priority and an access resource set, the second channel is used to carry second information, and the second information indicates a second correspondence between a priority and an access resource set; and
the transceiver module is configured to send the first channel and the second channel.

19. The communication apparatus according to claim 18, wherein the transceiver module is further configured to:
send first indication information, wherein the first indication information indicates a priority of a first service, or the first indication information indicates at least one priority parameter of a first service, the first service is a service to be performed by the terminal device, the priority parameter comprises at least one of the following: a delay tolerance value, a data amount, a network access frequency, a quantity of terminal devices, or an activeness, and the activeness is a quantity of devices of a same type that need to access a network per unit time.

20. The communication apparatus according to claim 19, wherein the transceiver module is further configured to:
send second indication information, wherein the second indication information indicates a third correspondence between a priority parameter and a priority.

21. The communication apparatus according to claim 20, wherein
the processing module is further configured to: determine that one or more priority parameters of the first service change, and update the third correspondence to a fourth correspondence based on the one or more changed priority parameters; and
the transceiver module is further configured to send third indication information, wherein the third indication information indicates the fourth correspondence.

22. The communication apparatus according to any one of claims 18 to 21, wherein the transceiver module is further configured to:
send configuration information, wherein the configuration information indicates a plurality of access resource sets, the plurality of access resource sets comprise the first access resource set and a second access resource set, and the first access resource set and the second access resource set meet:
an average spacing between adjacent resource elements comprised in the first access resource set is a first spacing, an average spacing between adjacent resource elements comprised in the second access resource set is a second spacing, the first spacing is greater than the second spacing, and a priority corresponding to the first access resource set is lower than a priority corresponding to the second access resource set.

23. A communication apparatus, wherein the communication apparatus comprises a processor, and the processor is configured to run a computer program or instructions, so that the communication apparatus performs the method according to any one of claims 1 to 6, or performs the method according to any one of claims 7 to 11.

24. A communication apparatus, wherein the communication apparatus comprises a processor and a memory, the memory is coupled to the processor, the memory is configured to store a computer program or instructions, and the processor is configured to run the computer program or the instructions, to implement the method according to any one of claims 1 to 6, or perform the method according to any one of claims 7 to 11.

25. A communication apparatus, wherein the communication apparatus comprises an input/output interface and a logic circuit, the input/output interface is configured to input and/or output information, and the logic circuit is configured to perform the method according to any one of claims 1 to 6, or perform the method according to any one of claims 7 to 11.

26. A computer-readable storage medium, wherein the computer-readable storage medium stores computer instructions, and when the computer instructions are executed, the computer is enabled to perform the method according to any one of claims 1 to 6 or 7 to 11.

27. A computer program product, wherein the computer program product comprises computer program code, and when the computer program code is run, the method according to any one of claims 1 to 6 or 7 to 11 is performed.
